(19) Europäisches Patentamt
European Patent Office
Office européen des brevets

(11) EP 4 779 393 A1

(12) EUROPEAN PATENT APPLICATION
published in accordance with Art. 153(4) EPC

(43) Date of publication:
**22.07.2026 Bulletin 2026/30**

(21) Application number: **24865153.1**

(22) Date of filing: **14.08.2024**

(51) International Patent Classification (IPC):
***G02B 27/02*** *(2006.01)* ***B32B 7/023*** *(2019.01)*
***G02B 5/30*** *(2006.01)* ***G09F 9/00*** *(2006.01)*

(52) Cooperative Patent Classification (CPC):
**B32B 7/023; G02B 5/30; G02B 27/02; G09F 9/00**

(86) International application number:
**PCT/JP2024/028997**

(87) International publication number:
**WO 2025/057647 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.09.2023 JP 2023149548**
**16.02.2024 JP 2024022094**

(71) Applicant: **Nitto Denko Corporation**
**Ibaraki-shi, Osaka 567-8680 (JP)**

(72) Inventor: **HAYASHI Daisuke**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) OPTICAL LAMINATE AND DISPLAY SYSTEM

(57) Provided is an optical laminate that can contribute to an improvement in display characteristic of a pair of VR goggles. A display system according to an embodiment of the present invention includes: a display element having a display surface configured to emit light representing an image to a front side through a polarizing member; a reflecting portion, which is arranged on a front side of the display element and includes a reflection-type polarizing member, the reflecting portion being configured to reflect the light emitted from the display element; a first lens portion arranged on an optical path between the display element and the reflecting portion; a half mirror arranged between the display element and the first lens portion, the half mirror being configured to transmit the light emitted from the display element and to reflect the light reflected by the reflecting portion toward the reflecting portion; a first retardation member arranged on an optical path between the display element and the half mirror; and a second retardation member arranged on an optical path between the half mirror and the reflecting portion. In an optical laminate including the polarizing member and the first retardation member, transmitted light having a wavelength of 550 nm has an ellipticity of 0.77 or more, which is measured at a polar angle of 30° and an azimuth angle of from 0° to 360°.

Fig.1

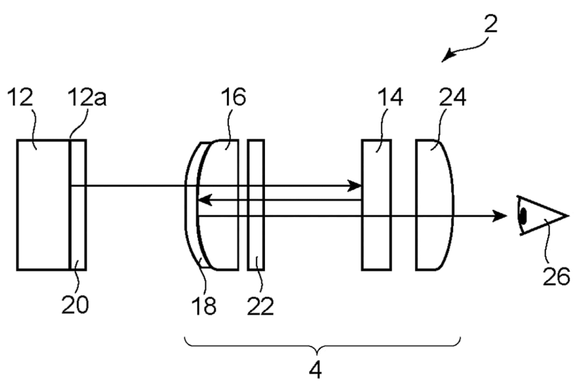




Processed by Luminess, 75001 PARIS (FR)

## Description

### Technical Field

The present invention relates to an optical laminate and a display system.

### Background Art

Image display apparatus typified by a liquid crystal display apparatus and an electroluminescence (EL) display apparatus (e.g., an organic EL display apparatus) have been rapidly gaining more widespread use. In the image display apparatus, an optical member, such as a polarizing member or a retardation member, has been generally used for achieving image display and improving the performance of the image display (see, for example, Patent Literature 1).

In recent years, new applications of the image display apparatus have been developed. For example, a pair of goggles (VR goggles) with a display for achieving virtual reality (VR) has started to be commercialized.

### Citation List

### Patent Literature

[PTL 1] JP 2021-103286 A

### Summary of Invention

### Technical Problem

In view of the foregoing, a primary object of the present invention is to provide an optical laminate that can contribute to an improvement in display characteristic of a pair of VR goggles.

### Solution to Problem

1. According to an embodiment of the present invention, there is provided a display system configured to display an image to a user, including: a display element having a display surface configured to emit light representing the image to a front side through a polarizing member; a reflecting portion, which is arranged on a front side of the display element and includes a reflection-type polarizing member, the reflecting portion being configured to reflect the light emitted from the display element; a first lens portion arranged on an optical path between the display element and the reflecting portion; a half mirror arranged between the display element and the first lens portion, the half mirror being configured to transmit the light emitted from the display element and to reflect the light reflected by the reflecting portion toward the reflecting portion; a first retardation member arranged on an optical path between the display element and the half mirror; and a second retardation member arranged on an optical path between the half mirror and the reflecting portion, wherein the polarizing member and the first retardation member form an optical laminate, and in the optical laminate, transmitted light having a wavelength of 550 nm has an ellipticity of 0.77 or more, which is measured at a polar angle of 30° and an azimuth angle of from 0° to 360°.

2. According to an embodiment of the present invention, there is provided an optical laminate, including: a polarizing member; and a retardation member arranged on one side of the polarizing member, wherein transmitted light having a wavelength of 550 nm has an ellipticity of 0.77 or more, which is measured at a polar angle of 30° and an azimuth angle of from 0° to 360°.

3. In the optical laminate according to the above-mentioned item 2, transmitted light having a wavelength of 450 nm may have an ellipticity of 0.77 or more, which is measured at a polar angle of 30° and an azimuth angle of from 0° to 360°.

4. In the optical laminate according to the above-mentioned item 2 or 3, transmitted light having a wavelength of 650 nm may have an ellipticity of 0.77 or more, which is measured at a polar angle of 30° and an azimuth angle of from 0° to 360°.

5. In the optical laminate according to any one of the above-mentioned items 2 to 4, when ellipticities of the transmitted light having a wavelength of 550 nm are measured at a polar angle of 30° in azimuth angle increments of 11.25° in an azimuth angle range of from 0° to 360°, an average of the ellipticities may be 0.83 or more.

6. In the optical laminate according to any one of the above-mentioned items 2 to 5, when ellipticities of transmitted light having a wavelength of 450 nm are measured at a polar angle of 30° in azimuth angle increments of 11.25° in an azimuth angle range of from 0° to 360°, an average of the ellipticities may be 0.80 or more.

7. In the optical laminate according to any one of the above-mentioned items 2 to 6, when ellipticities of transmitted light having a wavelength of 650 nm are measured at a polar angle of 30° in azimuth angle increments of 11.25° in an azimuth angle range of from 0° to 360°, an average of the ellipticities may be 0.80 or more.

8. In the optical laminate according to any one of the above-mentioned items 2 to 7, when ellipticities of the transmitted light having a wavelength of 550 nm are measured at a polar angle of 30° in azimuth angle increments of 11.25° in an azimuth angle range of from 0° to 360°, the number of data in which the ellipticities are 0.85 or more may be 10 or more.

9. In the optical laminate according to any one of the above-mentioned items 2 to 8, when ellipticities of transmitted light having a wavelength of 450 nm are measured at a polar angle of 30° in azimuth angle increments of 11.25° in an azimuth angle range of from 0° to 360°, the number of data in which the ellipticities are 0.85 or more may be 10 or more.

10. In the optical laminate according to any one of the above-mentioned items 2 to 9, when ellipticities of transmitted light having a wavelength of 650 nm are measured at a polar angle of 30° in azimuth angle increments of 11.25° in an azimuth angle range of from 0° to 360°, the number of data in which the ellipticities are 0.85 or more may be 10 or more.

11. In the optical laminate according to any one of the above-mentioned items 2 to 10, the transmitted light having a wavelength of 550 nm may have an ellipticity of 0.94 or more, which is measured at a polar angle of 0°.

12. In the optical laminate according to any one of the above-mentioned items 2 to 11, transmitted light having a wavelength of 450 nm may have an ellipticity of 0.94 or more, which is measured at a polar angle of 0°.

13. In the optical laminate according to any one of the above-mentioned items 2 to 12, transmitted light having a wavelength of 650 nm may have an ellipticity of 0.94 or more, which is measured at a polar angle of 0°.

14. In the optical laminate according to any one of the above-mentioned items 2 to 13, a value (1-DI) obtained by subtracting a depolarization index (DI) of the transmitted light having a wavelength of 550 nm, the depolarization index being measured at a polar angle of 0°, from 1 may be 99.5% or more.

15. In the optical laminate according to any one of the above-mentioned items 2 to 14, a value (1-DI) obtained by subtracting a depolarization index (DI) of the transmitted light having a wavelength of 550 nm, the depolarization index being measured at a polar angle of 30° and an azimuth angle of from 0° to 360°, from 1 may be 99.4% or more.

16. The optical laminate according to any one of the above-mentioned items 2 to 15 may be used as a first retardation member in a display method including the steps of: passing light representing an image, which has been emitted through the polarizing member, through the first retardation member; passing the light, which has passed through the first retardation member, through a half mirror and a first lens portion; passing the light, which has passed through the half mirror and the first lens portion, through a second retardation member; reflecting the light, which has passed through the second retardation member, toward the half mirror with a reflection-type polarizing member; and enabling the light, which has been reflected by the reflection-type polarizing member and the half mirror, to penetrate through the reflection-type polarizing member with the second retardation member.

## Advantageous Effects of Invention

According to the present invention, the optical laminate that can contribute to an improvement in display characteristic of a pair of VR goggles can be provided.

## Brief Description of Drawings

FIG. **1** is a schematic view for illustrating the schematic configuration of a display system according to one embodiment of the present invention.

FIG. **2** is a schematic sectional view of an optical laminate according to one embodiment of the present invention.

FIG. **3** is a schematic sectional view of the optical laminate according to one embodiment of the present invention.

Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are each merely an example, and do not limit the interpretation of the present invention. In addition, in the drawings, the same or similar components are denoted by the same reference symbols, and repetitive description thereof is omitted in some cases.

(Definitions of Terms and Symbols)

The definitions of terms and symbols used herein are as described below.

(1) Refractive Indices (nx, ny, and nz)

"nx" represents a refractive index in a direction in which an in-plane refractive index is maximum (that is, slow axis direction), "ny" represents a refractive index in a direction perpendicular to a slow axis in a plane (that is, fast axis direction), and "nz" represents a refractive index in a thickness direction.

(2) In-plane Retardation (Re)

"Re(λ)" refers to an in-plane retardation measured at 23°C with light having a wavelength of λ nm. For example, "Re(550)" refers to an in-plane retardation measured at 23°C with light having a wavelength of 550 nm. The Re(λ) is determined from the equation "$Re(\lambda)=(nx-ny)\times d$" when the thickness of a layer (film) is represented by "d" (nm).

(3) Thickness Direction Retardation (Rth)

"Rth(λ)" refers to a thickness direction retardation measured at 23°C with light having a wavelength of λ nm. For example, "Rth(550)" refers to a thickness direction retardation measured at 23°C with light having a wavelength of 550 nm. The Rth(λ) is determined from the equation "$Rth(\lambda)=(nx-nz)\times d$" when the thickness of a layer (film) is represented by "d" (nm).

(4) Nz Coefficient

An Nz coefficient is determined from the equation "Nz=Rth/Re".

(5) Angle

When reference is made to an angle herein, the angle encompasses both angles in a clockwise direction and a counterclockwise direction with respect to a reference direction unless otherwise stated. Accordingly, for example, the term "45°" means ±45°. In addition, the phrase "substantially parallel" as used herein encompasses a case in which the angle falls within the range of 0°±10°, and the angle falls within the range of preferably 0°±5°, more preferably 0°±3°, still more preferably 0°±1°, and the phrase "substantially perpendicular" as used herein encompasses a case in which the angle falls within the range of 90°±10°, and the angle falls within the range of preferably 90°±5°, more preferably 90°±3°, still more preferably 90°±1°.

A. Display System

FIG. **1** is a schematic view for illustrating the schematic configuration of a display system according to one embodiment of the present invention. The arrangement, shapes, and the like of the respective constituents of a display system **2** are schematically illustrated in FIG. **1**. The display system **2** includes a display element **12**, a reflecting portion **14**

including a reflection-type polarizing member, a first lens portion **16**, a half mirror **18**, a first retardation member **20**, a second retardation member **22**, and a second lens portion **24**. The reflecting portion **14** is arranged on the front side of the display element **12**, that is, the display surface **12a** side thereof, and can reflect light emitted from the display element **12**. The first lens portion **16** is arranged on an optical path between the display element **12** and the reflecting portion **14**, and the half mirror **18** is arranged between the display element **12** and the first lens portion **16**. The first retardation member **20** is arranged on an optical path between the display element **12** and the half mirror **18**, and the second retardation member **22** is arranged on an optical path between the half mirror **18** and the reflecting portion **14**. The half mirror and the constituents arranged on the front side thereof (in the illustrated example, the half mirror **18**, the first lens portion **16**, the second retardation member **22**, the reflecting portion **14**, and the second lens portion **24**) are sometimes collectively referred to as "lens unit (lens unit **4**)."

The display element **12** is, for example, a liquid crystal display or an organic EL display, and has a display surface **12a** for displaying an image. The light to be emitted from the display surface **12a** passes through, for example, a polarizing member (typically, a polarizing film) that may be incorporated into the display element **12** to be emitted as first linearly polarized light.

The first retardation member **20** can convert the first linearly polarized light, which has entered the first retardation member **20**, into first circularly polarized light. As illustrated in FIG. **1**, the first retardation member **20** may be arranged integrally with the display element **12**. Specifically, the polarizing member that may be incorporated into the display element **12** and the first retardation member **20** may be integrally arranged to form an optical laminate **200** to be described later. In other words, the retardation member **20** in the optical laminate **200** to be described later may be the first retardation member **20** in the display system **2**.

The half mirror **18** transmits the light emitted from the display element **12**, and reflects the light reflected by the reflecting portion **14** toward the reflecting portion **14**. The half mirror **18** is arranged integrally with the first lens portion **16**.

The second retardation member **22** is a λ/4 member that can cause the light, which has been reflected by the reflecting portion **14** including the reflection-type polarizing member and the half mirror **18**, to penetrate through the reflecting portion **14** (the second retardation member is hereinafter sometimes referred to as "second λ/4 member"). The second retardation member **22** may be arranged integrally with the first lens portion **16**.

The first circularly polarized light emitted from the retardation member (first retardation member) **20** passes through the half mirror **18** and the first lens portion **16**, and is converted into second linearly polarized light by the second λ/4 member **22**. The second linearly polarized light emitted from the second λ/4 member **22** is reflected toward the half mirror **18** without penetrating through the reflection-type polarizing member in the reflecting portion **14**. At this time, the polarization direction of the second linearly polarized light that has entered the reflection-type polarizing member in the reflecting portion **14** is the same direction as that of the reflection axis of the reflection-type polarizing member. Accordingly, the second linearly polarized light that has entered the reflecting portion **14** is reflected by the reflection-type polarizing member.

The second linearly polarized light reflected by the reflecting portion **14** is converted into second circularly polarized light by the second λ/4 member **22**, and the second circularly polarized light emitted from the second λ/4 member **22** passes through the first lens portion **16**, and is reflected by the half mirror **18**. The second circularly polarized light reflected by the half mirror **18** passes through the first lens portion **16**, and is converted into third linearly polarized light by the second λ/4 member **22**. The third linearly polarized light penetrates through the reflection-type polarizing member in the reflecting portion **14**. At this time, the polarization direction of the third linearly polarized light that has entered the reflection-type polarizing member in the reflecting portion **14** is the same direction as that of the transmission axis of the reflection-type polarizing member. Accordingly, the third linearly polarized light that has entered the reflecting portion **14** penetrates through the reflection-type polarizing member.

The light that has penetrated through the reflecting portion **14** passes through the second lens portion **24** to enter an eye **26** of a user.

For example, the absorption axis of the polarizing member in the display element **12** and the absorption axis of the reflection-type polarizing member in the reflecting portion **14** may be arranged substantially parallel to each other, or may be arranged substantially perpendicular to each other. An angle formed by the absorption axis of the polarizing member in the display element **12** and the slow axis of the first retardation member **20**, and the in-plane retardation of the first retardation member **20** are set so that the first linearly polarized light can be converted into the first circularly polarized light. The angle and the in-plane retardation described above are described in detail in the section B. An angle formed by the absorption axis of the polarizing member in the display element **12** and the slow axis of the second retardation member **22** is, for example, from 40° to 50°, and may be from 42° to 48°, or may be about 45°.

The in-plane retardation Re(550) of the second retardation member **22** is, for example, from 100 nm to 190 nm, and may be from 110 nm to 180 nm, may be from 130 nm to 160 nm, or may be from 135 nm to 155 nm.

The second retardation member **22** preferably shows such a reverse wavelength dispersion characteristic that its retardation value increases with an increase in wavelength of measurement light. The ratio "Re(450)/Re(550)" of the second retardation member **22** is, for example, less than 1, and may be 0.95 or less. Further, the ratio may be less than

0.90, in particular, 0.85 or less. The ratio "Re(450)/Re(550)" of the second retardation member **22** is, for example, 0.75 or more.

In one embodiment, the second retardation member **22** satisfies all of the relationships of Re(400)/Re(550) <0.85, Re(650)/Re(550)>1.03, and Re(750)/Re(550)>1.05. The second retardation member **22** preferably satisfies at least one selected from the relationships of 0.65<Re(400)/Re(550)<0.80 (preferably 0.7<Re(400)/Re(550)<0.75), 1.0<Re(650)/Re(550)<1.25 (preferably 1.05<Re(650)/Re(550)<1.20), and 1.05<Re(750)/Re(550)<1.40 (preferably 1.08<Re(750)/Re(550)<1.36), more preferably satisfies at least two of the relationships, and still more preferably satisfies all of the relationships.

The refractive index characteristic of the second retardation member **22** preferably shows the relationship of nx>ny≥nz. The equation "ny=nz" as used herein encompasses not only a case in which the ny and the nz are completely equal to each other but also a case in which the ny and the nz are substantially equal to each other. Accordingly, the ny may be less than the nz to the extent that the effect of the present invention is not impaired. The Nz coefficient of the second retardation member **22** is preferably from 0.9 to 3, more preferably from 0.9 to 2.5, still more preferably from 0.9 to 1.5, particularly preferably from 0.9 to 1.3.

The surface smoothness of the second retardation member **22** is, for example, 0.50 arcmin or less, preferably 0.40 arcmin or less, more preferably 0.30 arcmin or less, still more preferably 0.20 arcmin or less. When the second retardation member **22** satisfies such surface smoothness, a display system excellent in viewability can be achieved. For example, when such surface smoothness is satisfied, the uniformity of the in-plane retardation of the retardation member can be improved, and as a result, light leakage and the like in the reflecting portion to be described later can be suppressed. A method of measuring the surface smoothness is described later.

A variation in thickness of the second retardation member **22** is preferably 1 μm or less, more preferably 0.8 μm or less, still more preferably 0.6 μm or less, still further more preferably 0.4 μm or less. Such variation in thickness enables satisfactory achievement of, for example, the above-mentioned surface smoothness value.

The second retardation member **22** is formed from any appropriate material that can satisfy the above-mentioned characteristics. The second retardation member **22** may be, for example, a stretched film of a resin film or an alignment fixed layer of a liquid crystal compound. The same description as that of a layer functioning as a λ/4 plate for forming the first retardation member **20**, the layer being described in the section B, is applicable to the second retardation member **22** including the stretched film of the resin film or the alignment fixed layer of the liquid crystal compound. The layer functioning as a λ/4 plate and the second retardation member **22** may be members having the same configuration (e.g., a formation material, a thickness, or an optical characteristic), or may be members having different configurations.

The thickness of the second retardation member **22** is preferably 100 μm or less. Specifically, the thickness of the second retardation member **22** including the stretched film of the resin film is, for example, from 10 μm to 100 μm, preferably from 10 μm to 70 μm, more preferably from 10 μm to 60 μm, still more preferably from 20 μm to 50 μm. In addition, the thickness of the second retardation member **22** including the liquid crystal alignment fixed layer is, for example, from 1 μm to 10 μm, preferably from 1 μm to 8 μm, more preferably from 1 μm to 6 μm, still more preferably from 1 μm to 4 μm.

The reflecting portion **14** may include an absorption-type polarizing member in addition to the reflection-type polarizing member. The absorption-type polarizing member may be arranged on the front side of the reflection-type polarizing member. The reflection axis of the reflection-type polarizing member and the absorption axis of the absorption-type polarizing member may be arranged substantially parallel to each other, and the transmission axis of the reflection-type polarizing member and the transmission axis of the absorption-type polarizing member may be arranged substantially parallel to each other. When the reflecting portion **14** includes the absorption-type polarizing member, the reflecting portion **14** may include a laminate including the reflection-type polarizing member and the absorption-type polarizing member.

The above-mentioned reflection-type polarizing member can transmit polarized light (typically, linearly polarized light) parallel to its transmission axis while maintaining the polarization state of the light, and can reflect light in any other polarization state (typically, light in a polarization state perpendicular to the transmission axis). The cross transmittance (Tc) of the reflection-type polarizing member may be, for example, from 0.01% to 3%. The single layer transmittance (Ts) of the reflection-type polarizing member may be, for example, from 43% to 49%, preferably from 45% to 47%. The polarization degree (P) of the reflection-type polarizing member may be, for example, from 92% to 99.99%. The reflection-type polarizing member typically includes a film having a multilayer structure (sometimes referred to as "reflection-type polarizing film"). A commercial product of the reflection-type polarizing film is, for example, a product available under the product name "DBEF" or "APF" from 3M Company, or a product available under the product name "APCF" from Nitto Denko Corporation.

The above-mentioned absorption-type polarizing member may typically include a resin film containing a dichroic substance (i.e., an absorption-type polarizer). An absorption-type polarizer described in the section B may be used as the absorption-type polarizer. The thickness of the absorption-type polarizer is, for example, 1 μm or more and 20 μm or less, and may be 2 μm or more and 15 μm or less, may be 12 μm or less, may be 10 μm or less, may be 8 μm or less, or may be 5 μm or less.

B. Optical Laminate

FIG. **2** is a schematic sectional view of an optical laminate according to one embodiment of the present invention. The optical laminate **200** includes: a polarizing member **10**; and the retardation member **20** arranged on one side of the polarizing member **10**. In one embodiment, the above-mentioned optical laminate may be used by being arranged on a display element side (e.g., between a display element and a lens unit) in a display system such as a pair of VR goggles. The above-mentioned optical laminate is preferably arranged so that the polarizing member may be on the display element side of the system, and the retardation member may be on the viewer side thereof. As described above, in the above-mentioned display system, the polarizing member in the display element and the first retardation member may form the optical laminate.

In the above-mentioned optical laminate, transmitted light having a wavelength of 550 nm has an ellipticity of 0.77 or more, which is measured at a polar angle of 30° and an azimuth angle of from 0° to 360°. The use of an optical laminate showing such ellipticity can provide a display system excellent in display characteristic. In, for example, a display system including a lens unit, when the above-mentioned optical laminate is arranged on an optical path before arrival at the lens unit, light having high circular polarizability can be introduced into the lens unit of the display system. As a result, a so-called ghost phenomenon in which display images are viewed in an overlapping manner can be reduced. In addition, light leakage is suppressed, and the suppression can contribute to an improvement in definition of the system. Those effects are made significant by incorporating the above-mentioned optical laminate into the display system described in the section A. A great achievement of the above-mentioned optical laminate is that an improvement in display characteristic of the system can be achieved by precisely controlling the ellipticity of the transmitted light over all azimuths. The ellipticity is the ratio of the minor axis of circularly polarized light to the major axis thereof. For example, the ellipticity of completely circularly polarized light is 1, and the ellipticity of completely linearly polarized light is 0. In addition, the term "ellipticity" as used herein means the absolute value of an ellipticity.

In this description, the ellipticity of transmitted light measured at a polar angle of 30° and an azimuth angle of from 0° to 360° is an ellipticity measured as follows: light having a predetermined wavelength is caused to enter at a polar angle of 30° from the polarizing member side of the optical laminate; and the ellipticity of emitted light at a polar angle of 30° is measured in azimuth angle increments of 11.25° in the azimuth angle range of from 0° to 360°. Accordingly, the phrase "ellipticity is X or more," the ellipticity being measured at an azimuth angle of from 0° to 360°, means that the minimum value of 32 measured values thus obtained is X.

In the above-mentioned optical laminate, the ellipticity of the transmitted light having a wavelength of 550 nm, the ellipticity being measured at a polar angle of 30° and an azimuth angle of from 0° to 360°, is preferably 0.78 or more, more preferably 0.80 or more, still more preferably 0.82 or more, particularly preferably 0.84 or more. When the ellipticity falls within such ranges, the above-mentioned effects become significant. In the optical laminate, although the ellipticity of the transmitted light having a wavelength of 550 nm, the ellipticity being measured at a polar angle of 30° and an azimuth angle of from 0° to 360°, is preferably as high as possible, the upper limit thereof is, for example, 0.90 (preferably 0.93, more preferably 0.95, still more preferably 0.99).

In one embodiment, in the above-mentioned optical laminate, the ellipticity of transmitted light having a wavelength of 450 nm, the ellipticity being measured at a polar angle of 30° and an azimuth angle of from 0° to 360°, is preferably 0.77 or more, more preferably 0.80 or more, still more preferably 0.82 or more, particularly preferably 0.84 or more. When the ellipticity falls within such ranges, there can be obtained an optical laminate whose ghost phenomenon-reducing effect, light leakage-suppressing effect, and definition-improving effect are significant. In the above-mentioned optical laminate, although the ellipticity of the transmitted light having a wavelength of 450 nm, the ellipticity being measured at a polar angle of 30° and an azimuth angle of from 0° to 360°, is preferably as high as possible, the upper limit thereof is, for example, 0.90 (preferably 0.93, more preferably 0.95, still more preferably 0.99).

In one embodiment, in the above-mentioned optical laminate, the ellipticity of transmitted light having a wavelength of 650 nm, the ellipticity being measured at a polar angle of 30° and an azimuth angle of from 0° to 360°, is preferably 0.77 or more, more preferably 0.80 or more, still more preferably 0.82 or more. When the ellipticity falls within such ranges, there can be obtained an optical laminate whose ghost phenomenon-reducing effect, light leakage-suppressing effect, and definition-improving effect are significant. In the above-mentioned optical laminate, although the ellipticity of the transmitted light having a wavelength of 650 nm, the ellipticity being measured at a polar angle of 30° and an azimuth angle of from 0° to 360°, is preferably as high as possible, the upper limit thereof is, for example, 0.90 (preferably 0.93, more preferably 0.95, still more preferably 0.99).

In one embodiment, in the above-mentioned optical laminate, when the ellipticities of the transmitted light having a wavelength of 550 nm are measured at a polar angle of 30° in azimuth angle increments of 11.25° in the azimuth angle range of from 0° to 360°, the average of the ellipticities is 0.83 or more, preferably 0.84 or more, more preferably 0.86 or more. When the average falls within such ranges, there can be obtained an optical laminate whose ghost phenomenon-reducing effect, light leakage-suppressing effect, and definition-improving effect are significant. When the ellipticities of the transmitted light having a wavelength of 550 nm are measured at a polar angle of 30° in azimuth angle increments of

11.25° in the azimuth angle range of from 0° to 360°, although the average of the ellipticities is preferably as high as possible, the upper limit thereof is, for example, 0.90 (preferably 0.95). In this description, the average of the ellipticities means the average of 32 measured values obtained by measuring the ellipticities as described above.

In one embodiment, in the above-mentioned optical laminate, when the ellipticities of the transmitted light having a wavelength of 450 nm are measured at a polar angle of 30° in azimuth angle increments of 11.25° in the azimuth angle range of from 0° to 360°, the average of the ellipticities is 0.80 or more, preferably 0.84 or more, more preferably 0.86 or more. When the average falls within such ranges, there can be obtained an optical laminate whose ghost phenomenon-reducing effect, light leakage-suppressing effect, and definition-improving effect are significant. In the above-mentioned optical laminate, when the ellipticities of the transmitted light having a wavelength of 450 nm are measured at a polar angle of 30° in azimuth angle increments of 11.25° in the azimuth angle range of from 0° to 360°, although the average of the ellipticities is preferably as high as possible, the upper limit thereof is, for example, 0.90 (preferably 0.95).

In one embodiment, in the above-mentioned optical laminate, when the ellipticities of the transmitted light having a wavelength of 650 nm are measured at a polar angle of 30° in azimuth angle increments of 11.25° in the azimuth angle range of from 0° to 360°, the average of the ellipticities is 0.80 or more, preferably 0.84 or more, more preferably 0.86 or more. When the average falls within such ranges, there can be obtained an optical laminate whose ghost phenomenon-reducing effect, light leakage-suppressing effect, and definition-improving effect are significant. In the above-mentioned optical laminate, when the ellipticities of the transmitted light having a wavelength of 650 nm are measured at a polar angle of 30° in azimuth angle increments of 11.25° in the azimuth angle range of from 0° to 360°, although the average of the ellipticities is preferably as high as possible, the upper limit thereof is, for example, 0.90 (preferably 0.95).

In one embodiment, in the above-mentioned optical laminate, when the ellipticities of the transmitted light having a wavelength of 550 nm are measured at a polar angle of 30° in azimuth angle increments of 11.25° in the azimuth angle range of from 0° to 360°, the number of data in which the ellipticities are 0.85 or more is 10 or more, preferably 15 or more, more preferably 20 or more, still more preferably 25 or more, particularly preferably 30 or more, most preferably 32. When the number falls within such ranges, there can be obtained an optical laminate whose ghost phenomenon-reducing effect, light leakage-suppressing effect, and definition-improving effect are significant.

In one embodiment, in the above-mentioned optical laminate, when the ellipticities of the transmitted light having a wavelength of 450 nm are measured at a polar angle of 30° in azimuth angle increments of 11.25° in the azimuth angle range of from 0° to 360°, the number of data in which the ellipticities are 0.85 or more is 10 or more, preferably 15 or more, more preferably 20 or more, still more preferably 25 or more, particularly preferably 30 or more, most preferably 32. When the number falls within such ranges, there can be obtained an optical laminate whose ghost phenomenon-reducing effect, light leakage-suppressing effect, and definition-improving effect are significant.

In one embodiment, in the above-mentioned optical laminate, when the ellipticities of the transmitted light having a wavelength of 650 nm are measured at a polar angle of 30° in azimuth angle increments of 11.25° in the azimuth angle range of from 0° to 360°, the number of data in which the ellipticities are 0.85 or more is 10 or more, preferably 15 or more, more preferably 20 or more, still more preferably 25 or more, particularly preferably 30 or more, most preferably 32. When the number falls within such ranges, there can be obtained an optical laminate whose ghost phenomenon-reducing effect, light leakage-suppressing effect, and definition-improving effect are significant.

In one embodiment, in the above-mentioned optical laminate, the ellipticity of the transmitted light having a wavelength of 550 nm, the ellipticity being measured at a polar angle of 0° (front direction), is preferably 0.94 or more, more preferably 0.95 or more, still more preferably 0.96 or more. When the ellipticity falls within such ranges, there can be obtained an optical laminate whose ghost phenomenon-reducing effect, light leakage-suppressing effect, and definition-improving effect are significant. In the optical laminate, although the ellipticity of the transmitted light having a wavelength of 550 nm, the ellipticity being measured at a polar angle of 0° (front direction), is preferably as high as possible, the upper limit thereof is, for example, 0.99 (preferably 1).

In one embodiment, in the above-mentioned optical laminate, the ellipticity of the transmitted light having a wavelength of 450 nm, the ellipticity being measured at a polar angle of 0° (front direction), is preferably 0.94 or more, more preferably 0.95 or more, still more preferably 0.96 or more. When the ellipticity falls within such ranges, there can be obtained an optical laminate whose ghost phenomenon-reducing effect, light leakage-suppressing effect, and definition-improving effect are significant. In the optical laminate, although the ellipticity of the transmitted light having a wavelength of 450 nm, the ellipticity being measured at a polar angle of 0° (front direction), is preferably as high as possible, the upper limit thereof is, for example, 0.99 (preferably 1).

In one embodiment, in the above-mentioned optical laminate, the ellipticity of the transmitted light having a wavelength of 650 nm, the ellipticity being measured at a polar angle of 0° (front direction), is preferably 0.94 or more, more preferably 0.95 or more, still more preferably 0.96 or more. When the ellipticity falls within such ranges, there can be obtained an optical laminate whose ghost phenomenon-reducing effect, light leakage-suppressing effect, and definition-improving effect are significant. In the optical laminate, although the ellipticity of the transmitted light having a wavelength of 650 nm, the ellipticity being measured at a polar angle of 0° (front direction), is preferably as high as possible, the upper limit thereof is, for example, 0.99 (preferably 1).

In the above-mentioned optical laminate, the ratio (ellipticity B/ellipticity A) of an ellipticity B to an ellipticity A, the ellipticities being defined as follows, is preferably 0.85 or more, more preferably 0.88 or more, still more preferably 0.9 or more: "the ellipticity of the transmitted light having a wavelength of 550 nm, the ellipticity being measured at a polar angle of 0° (front direction)," is defined as the ellipticity A; and "when the ellipticities of the transmitted light having a wavelength of 550 nm are measured at a polar angle of 30° in azimuth angle increments of 11.25° in the azimuth angle range of from 0° to 360°, the average of the ellipticities" is defined as the ellipticity B. When the ratio falls within such ranges, there can be obtained an optical laminate whose ghost phenomenon-reducing effect, light leakage-suppressing effect, and definition-improving effect are significant. The upper limit of the ratio "ellipticity B/ellipticity A" is, for example, 0.98 (preferably 0.99, more preferably 1).

In one embodiment, a value (1-DI) obtained by subtracting the depolarization index (DI) of the above-mentioned optical laminate from 1 is 60% or more. The depolarization index may be determined from the following equation (2) by measuring a Mueller matrix (the following equation (1)) representing a polarization action. The Mueller matrix representing a polarization action is measured with, for example, a Mueller matrix polarimeter (manufactured by Axometrics, Inc., product name: "AxoScan") by causing light having a predetermined wavelength (e.g., 550 nm) to enter from the polarizing member side of the optical laminate at 23°C.

$$\begin{pmatrix} m00 & m01 & m02 & m03 \\ m10 & m11 & m12 & m13 \\ m20 & m21 & m22 & m23 \\ m30 & m31 & m32 & m33 \end{pmatrix} \quad \cdots (1)$$

$$DI = 1 - \frac{\sqrt{\left(\sum_{i,j} m_{i,j}^2\right) - m_{00}^2}}{\sqrt{3}\, m_{00}} \quad \cdots (2)$$

In the above-mentioned optical laminate, a value (1-DI) obtained by subtracting the depolarization index (DI) of the transmitted light having a wavelength of 550 nm, the depolarization index being measured at a polar angle of 30° and an azimuth angle of from 0° to 360°, from 1 is preferably 99.4% or more, more preferably 99.5% or more, still more preferably 99.6% or more, particularly preferably 99.68% or more. When the value falls within such ranges, the effect of the present invention becomes significant. In this description, a depolarization index (DI) at a predetermined wavelength measured at a polar angle of 30° and an azimuth angle of from 0° to 360° is the average of depolarization indices measured as follows: light having the predetermined wavelength is caused to enter at a polar angle of 30° from the polarizing member side of the optical laminate; and the depolarization indices of emitted light at a polar angle of 30° are measured in azimuth angle increments of 11.25° in the azimuth angle range of from 0° to 360°.

In the above-mentioned optical laminate, a value (1-DI) obtained by subtracting the depolarization index (DI) of the transmitted light having a wavelength of 450 nm, the depolarization index being measured at a polar angle of 30° and an azimuth angle of from 0° to 360°, from 1 is preferably 99.4% or more, more preferably 99.5% or more, still more preferably 99.6% or more. When the value falls within such ranges, the effect of the present invention becomes significant.

In the above-mentioned optical laminate, a value (1-DI) obtained by subtracting the depolarization index (DI) of the transmitted light having a wavelength of 650 nm, the depolarization index being measured at a polar angle of 30° and an azimuth angle of from 0° to 360°, from 1 is preferably 99.4% or more, more preferably 99.5% or more, still more preferably 99.6% or more. When the value falls within such ranges, the effect of the present invention becomes significant.

In the above-mentioned optical laminate, a value (1-DI) obtained by subtracting the depolarization index (DI) of the transmitted light having a wavelength of 550 nm, the depolarization index being measured at a polar angle of 0° (front direction), from 1 is preferably 99.5% or more, more preferably 99.6% or more, still more preferably 99.7% or more, particularly preferably 99.75% or more. When the value falls within such ranges, the effect of the present invention becomes significant.

In the above-mentioned optical laminate, a value (1-DI) obtained by subtracting the depolarization index (DI) of the transmitted light having a wavelength of 450 nm, the depolarization index being measured at a polar angle of 0° (front direction), from 1 is preferably 99.5% or more, more preferably 99.6% or more, still more preferably 99.7% or more. When the value falls within such ranges, the effect of the present invention becomes significant.

In the above-mentioned optical laminate, a value (1-DI) obtained by subtracting the depolarization index (DI) of the transmitted light having a wavelength of 650 nm, the depolarization index being measured at a polar angle of 0° (front direction), from 1 is preferably 99.4% or more, more preferably 99.5% or more, still more preferably 99.6% or more. When the value falls within such ranges, the effect of the present invention becomes significant.

(Retardation Member)

The retardation member in the above-mentioned optical laminate may have a single-layer configuration, or may have a laminated configuration. The retardation member in the above-mentioned optical laminate preferably includes a layer functioning as a $\lambda/4$ plate and a layer functioning as a $\lambda/2$ plate. When the layer functioning as a $\lambda/4$ plate and the layer functioning as a $\lambda/2$ plate form the retardation member, an optical laminate that can emit light having a high ellipticity can be obtained.

In one embodiment, as illustrated in FIG. **3**, the optical laminate **200** includes the polarizing member **10**, a layer **20a** functioning as a $\lambda/2$ plate, and a layer **20b** functioning as a $\lambda/4$ plate in the stated order. The optical laminate **200** is preferably used so that the layer **20b** functioning as a $\lambda/4$ plate may be on its viewer side. An angle formed by the slow axis of the layer functioning as a $\lambda/2$ plate and the absorption axis of the polarizing member is preferably from 5° to 35°, more preferably from 10° to 20°, still more preferably from 12° to 18°, particularly preferably about 15°. An angle formed by the slow axis of the layer functioning as a $\lambda/4$ plate and the absorption axis of the polarizing member is preferably from 55° to 85°, more preferably from 70° to 80°, still more preferably from 72° to 78°, particularly preferably about 75°.

The in-plane retardation Re(550) of the layer functioning as a $\lambda/4$ plate is, for example, from 100 nm to 200 nm, and may be from 110 nm to 180 nm, may be from 130 nm to 160 nm, or may be from 135 nm to 155 nm.

The in-plane retardation Re(550) of the layer functioning as a $\lambda/2$ plate is, for example, from 200 nm to 330 nm, and may be from 230 nm to 330 nm, may be from 230 nm to 290 nm, or may be from 250 nm to 280 nm.

A layer (e.g., the layer functioning as a $\lambda/4$ plate or the layer functioning as a $\lambda/2$ plate) for forming the retardation member in the optical laminate preferably shows such a reverse wavelength dispersion characteristic that its retardation value increases with an increase in wavelength of measurement light. The ratio "Re(450)/Re(550)" of the layer for forming the retardation member described above is, for example, less than 1, and may be 0.95 or less. Further, the ratio may be less than 0.90, in particular, 0.85 or less. The ratio "Re(450)/Re(550)" of the layer for forming the retardation member described above is, for example, 0.75 or more.

In one embodiment, the layer for forming the retardation member described above satisfies all of the relationships of $Re(400)/Re(550)<0.85$, $Re(650)/Re(550)>1.03$, and $Re(750)/Re(550)>1.05$. The layer for forming the retardation member described above preferably satisfies at least one selected from the relationships of $0.65<Re(400)/Re(550)<0.80$ (preferably $0.7<Re(400)/Re(550)<0.75$), $1.0<Re(650)/Re(550)<1.25$ (preferably $1.05<Re(650)/Re(550)<1.20$), and $1.05<Re(750)/Re(550)<1.40$ (preferably $1.08<Re(750)/Re(550)<1.36$), more preferably satisfies at least two of the relationships, and still more preferably satisfies all of the relationships.

The refractive index characteristic of the layer for forming the retardation member in the optical laminate preferably shows the relationship of $nx>ny\geq nz$. The equation "ny=nz" as used herein encompasses not only a case in which the ny and the nz are completely equal to each other but also a case in which the ny and the nz are substantially equal to each other. Accordingly, the ny may be less than the nz to the extent that the effect of the present invention is not impaired. The Nz coefficient of the layer for forming the retardation member in the optical laminate is preferably from 0.9 to 3, more preferably from 0.9 to 2.5, still more preferably from 0.9 to 1.5, particularly preferably from 0.9 to 1.3.

The surface smoothness of the layer for forming the retardation member in the optical laminate is, for example, 0.50 arcmin or less, preferably 0.40 arcmin or less, more preferably 0.30 arcmin or less, still more preferably 0.20 arcmin or less. When the surface smoothness falls within such ranges, a display system excellent in viewability can be achieved. For example, when such surface smoothness is satisfied, the uniformity of the in-plane retardation of the retardation member can be improved, and as a result, a display system having an excellent display characteristic can be obtained.

A variation in thickness of the layer for forming the retardation member in the optical laminate is preferably 1 μm or less, more preferably 0.8 μm or less, still more preferably 0.6 μm or less, still further more preferably 0.4 μm or less. Such variation in thickness enables satisfactory achievement of, for example, the above-mentioned surface smoothness. Herein, the variation in thickness may be determined by measuring the thickness of a first site positioned in a measurement surface and the thicknesses of positions at predetermined intervals (of, for example, from 5 mm to 15 mm) from the first site in any appropriate directions (e.g., an upper direction, a lower direction, a left direction, and a right direction).

The layer for forming the retardation member in the optical laminate is formed from any appropriate material that can satisfy the above-mentioned characteristics. The retardation member may be, for example, a stretched film of a resin film or an alignment fixed layer of a liquid crystal compound. The stretched film of the resin film is sometimes referred to as "retardation film."

A resin to be incorporated into the above-mentioned resin film is, for example, a polycarbonate-based resin, a polyester carbonate-based resin, a polyester-based resin, a polyvinyl acetal-based resin, a polyarylate-based resin, a cyclic olefin-based resin, a cellulose-based resin, a polyvinyl alcohol-based resin, a polyamide-based resin, a polyimide-based resin, a polyether-based resin, a polystyrene-based resin, or an acrylic resin. Those resins may be used alone or in combination thereof (for example, as a blend or copolymer thereof). When the layer for forming the retardation member in the optical laminate shows a reverse wavelength dispersion characteristic, a resin film containing a polycarbonate-based resin or a polyester carbonate-based resin (hereinafter sometimes simply referred to as "polycarbonate-based resin") may

be suitably used.

Any appropriate polycarbonate-based resin may be used as the above-mentioned polycarbonate-based resin as long as the effect of the present invention is obtained. For example, the polycarbonate-based resin includes a structural unit derived from a fluorene-based dihydroxy compound, a structural unit derived from an isosorbide-based dihydroxy compound, and a structural unit derived from at least one dihydroxy compound selected from the group consisting of: an alicyclic diol; an alicyclic dimethanol; di-, tri-, or polyethylene glycol; and an alkylene glycol or spiroglycol. The polycarbonate-based resin preferably includes a structural unit derived from a fluorene-based dihydroxy compound, a structural unit derived from an isosorbide-based dihydroxy compound, and a structural unit derived from an alicyclic dimethanol and/or a structural unit derived from di-, tri-, or polyethylene glycol, and more preferably includes a structural unit derived from a fluorene-based dihydroxy compound, a structural unit derived from an isosorbide-based dihydroxy compound, and a structural unit derived from di-, tri-, or polyethylene glycol. The polycarbonate-based resin may include a structural unit derived from any other dihydroxy compound as required. Details about the polycarbonate-based resin that may be suitably used in the layer for forming the first retardation member and a method of forming the layer for forming the first retardation member are described in, for example, JP 2014-10291 A, JP 2014-26266 A, JP 2015-212816 A, JP 2015-212817 A, and JP 2015-212818 A, the descriptions of which are incorporated herein by reference.

When the layer functioning as a $\lambda/4$ plate is formed from a stretched film, its thickness is, for example, from 10 μm to 100 μm, preferably from 10 μm to 70 μm, more preferably from 10 μm to 60 μm, still more preferably from 20 μm to 50 μm. When the layer functioning as a $\lambda/2$ plate is formed from a stretched film, its thickness is, for example, from 20 μm to 200 μm, preferably from 20 μm to 140 μm, more preferably from 20 μm to 120 μm, still more preferably from 40 μm to 100 μm.

The alignment fixed layer of the liquid crystal compound described above is such a layer that the liquid crystal compound is aligned in a predetermined direction in the layer, and its alignment state is fixed. The term "alignment fixed layer" is a concept encompassing an alignment cured layer obtained by curing a liquid crystal monomer as described later. The molecules of a rod-shaped liquid crystal compound are typically aligned under the state of being lined up in the slow axis direction of the layer (e.g., the layer functioning as a $\lambda/4$ plate or the layer functioning as a $\lambda/2$ plate) for forming the retardation member in the optical laminate (homogeneous alignment). Examples of the rod-shaped liquid crystal compound include a liquid crystal polymer and a liquid crystal monomer. The liquid crystal compound is preferably polymerizable. When the liquid crystal compound is polymerizable, the alignment state of the liquid crystal compound can be fixed by aligning the liquid crystal compound and then polymerizing the compound.

The alignment fixed layer of the liquid crystal compound (liquid crystal alignment fixed layer) described above may be formed by: subjecting the surface of a predetermined substrate to alignment treatment; applying an application liquid containing a liquid crystal compound to the surface; aligning the liquid crystal compound in a direction corresponding to the alignment treatment; and fixing the alignment state. Any appropriate alignment treatment may be adopted as the alignment treatment. Specific examples thereof include mechanical alignment treatment, physical alignment treatment, and chemical alignment treatment. Specific examples of the mechanical alignment treatment include rubbing treatment and stretching treatment. Specific examples of the physical alignment treatment include magnetic field alignment treatment and electric field alignment treatment. Specific examples of the chemical alignment treatment include an oblique deposition method and photoalignment treatment. Any appropriate conditions may be adopted as treatment conditions for the various alignment treatments in accordance with purposes.

The alignment of the liquid crystal compound is performed through treatment at a temperature at which the liquid crystal compound shows a liquid crystal phase depending on the kind of the liquid crystal compound. When the treatment at such temperature is performed, the liquid crystal compound adopts a liquid crystal state, and the liquid crystal compound is aligned in accordance with the alignment treatment direction of the surface of the substrate.

In one embodiment, the fixation of the alignment state is performed by cooling the liquid crystal compound aligned as described above. When the liquid crystal compound is polymerizable or cross-linkable, the fixation of the alignment state is performed by subjecting the liquid crystal compound aligned as described above to polymerization treatment or cross-linking treatment.

Any appropriate liquid crystal polymer and/or liquid crystal monomer is used as the above-mentioned liquid crystal compound. The liquid crystal polymers and the liquid crystal monomers may each be used alone or in combination thereof. Specific examples of the liquid crystal compound and a method of producing the liquid crystal alignment fixed layer are described in, for example, JP 2006-163343 A, JP 2006-178389 A, and WO 2018/123551 A1, the descriptions of which are incorporated herein by reference.

When the layer functioning as a $\lambda/4$ plate is formed from an alignment fixed layer of a liquid crystal compound, its thickness is, for example, from 1 μm to 10 μm, preferably from 1 μm to 8 μm, more preferably from 1 μm to 6 μm, still more preferably from 1 μm to 4 μm. When the layer functioning as a $\lambda/2$ plate is formed from an alignment fixed layer of a liquid crystal compound, its thickness is, for example, from 2 μm to 20 μm, preferably from 2 μm to 16 μm, more preferably from 2 μm to 12 μm, still more preferably from 2 μm to 8 μm.

(Polarizing Member)

The above-mentioned polarizing member may typically include a resin film containing a dichroic substance (sometimes referred to as "absorption-type polarizer"). The thickness of the absorption-type polarizer is, for example, 1 μm or more and 20 μm or less, and may be 2 μm or more and 15 μm or less, may be 12 μm or less, may be 10 μm or less, may be 8 μm or less, or may be 5 μm or less.

The above-mentioned polarizing member may be produced from a single-layer resin film, or may be produced by using a laminate of two or more layers.

When the polarizing member is produced from the single-layer resin film, the polarizing member may be obtained by, for example, subjecting a hydrophilic polymer film, such as a polyvinyl alcohol (PVA)-based film, a partially formalized PVA-based film, or an ethylene-vinyl acetate copolymer-based partially saponified film, to dyeing treatment with a dichroic substance, such as iodine or a dichroic dye, or stretching treatment. Of such polarizing members, a polarizing member obtained by dyeing a PVA-based film with iodine and uniaxially stretching the dyed film is preferred.

The above-mentioned dyeing with iodine is performed by, for example, immersing the PVA-based film in an aqueous solution of iodine. The stretching ratio of the above-mentioned uniaxial stretching is preferably from 3 times to 7 times. The stretching may be performed after the dyeing treatment, or may be performed while the dyeing is performed. Alternatively, the dyeing may be performed after the stretching. The PVA-based film is subjected to swelling treatment, cross-linking treatment, washing treatment, drying treatment, or the like as required.

When the polarizing member is produced by using the above-mentioned laminate of two or more layers, the laminate is, for example, a laminate of a resin substrate and a PVA-based resin layer (PVA-based resin film) laminated on the resin substrate or a laminate of a resin substrate and a PVA-based resin layer formed on the resin substrate through application. The absorption-type polarizer obtained by using the laminate of the resin substrate and the PVA-based resin layer formed on the resin substrate through application may be produced, for example, by: applying a PVA-based resin solution to the resin substrate; drying the solution to form the PVA-based resin layer on the resin substrate, to thereby provide the laminate of the resin substrate and the PVA-based resin layer; and stretching and dyeing the laminate to turn the PVA-based resin layer into the absorption-type polarizer. In this embodiment, a polyvinyl alcohol-based resin layer containing a halide and a polyvinyl alcohol-based resin is preferably formed on one side of the resin substrate. The stretching typically includes stretching the laminate under a state in which the laminate is immersed in an aqueous solution of boric acid. Further, the stretching may further include in-air stretching of the laminate at high temperature (e.g., 95°C or more) before the stretching in the aqueous solution of boric acid as required. In addition, in this embodiment, the laminate is preferably subjected to drying shrinkage treatment, which includes heating the laminate, while conveying the laminate in its lengthwise direction, to shrink the laminate by 2% or more in its widthwise direction. The production method of this embodiment typically includes subjecting the laminate to in-air auxiliary stretching treatment, dyeing treatment, underwater stretching treatment, and drying shrinkage treatment in the stated order. When the auxiliary stretching is introduced, even in the case where PVA is applied onto a thermoplastic resin, the crystallinity of the PVA can be improved, and hence high optical characteristics can be achieved. In addition, when the alignment property of the PVA is improved in advance simultaneously with the crystallinity improvement, problems, such as a reduction in alignment property of the PVA and the dissolution thereof, can be prevented at the time of the immersion of the laminate in water in the subsequent dyeing step or stretching step, and hence high optical characteristics can be achieved. Further, in the case where the PVA-based resin layer is immersed in a liquid, the disturbance of the alignment of polyvinyl alcohol molecules and reductions in alignment properties thereof can be suppressed as compared to those in the case where the PVA-based resin layer is free of any halide. Thus, the optical characteristics of the absorption-type polarizer to be obtained through treatment steps performed by immersing the laminate in a liquid, such as the dyeing treatment and the underwater stretching treatment, can be improved. Further, the optical characteristics can be improved by shrinking the laminate in its widthwise direction through the drying shrinkage treatment. The resultant laminate of the resin substrate and the absorption-type polarizer may be used as it is (that is, the resin substrate may be used as a protective layer for the absorption-type polarizer), or may be used by laminating any appropriate protective layer in accordance with purposes on the peeled surface on which the resin substrate has been peeled from the laminate of the resin substrate and the absorption-type polarizer, or on a surface on an opposite side to the peeled surface. Details about such method of producing the absorption-type polarizer are described in, for example, JP 2012-73580 A or JP 6470455 B1, the description of which is incorporated herein by reference in its entirety.

The cross transmittance (Tc) of the absorption-type polarizer is preferably 0.5% or less, more preferably 0.1% or less, still more preferably 0.05% or less. The single layer transmittance (Ts) of the absorption-type polarizer is, for example, from 41.0% to 45.0%, preferably 42.0% or more. The polarization degree (P) of the absorption-type polarizer is, for example, from 99.0% to 99.997%, preferably 99.9% or more.

(Other Member)

The respective members for forming the above-mentioned optical laminate may be laminated via any appropriate adhesion layer. The lamination of the members via the adhesion layer can provide an optical laminate excellent in smoothness. When, for example, the display system described in the section A is formed by using the optical laminate excellent in smoothness, even after an image has been enlarged by its lens unit, image display excellent in display characteristic can be achieved.

In one embodiment, the retardation member in the optical laminate includes any appropriate adhesion layer, and the layers for forming the retardation member in the optical laminate may be laminated via the adhesion layer. In addition, the retardation member and the polarizing member may be laminated via the adhesion layer. The integration of the retardation member and the polarizing member via the adhesion layer can provide an optical laminate that can contribute to the prevention of a ghost phenomenon.

The adhesion layer may be formed from an adhesive, or may be formed from a pressure-sensitive adhesive. Specifically, the adhesion layer may be an adhesive layer or a pressure-sensitive adhesive layer. The thickness of the adhesion layer is, for example, from 0.05 μm to 30 μm.

Specific examples of the pressure-sensitive adhesive include an acrylic pressure-sensitive adhesive, a rubber-based pressure-sensitive adhesive, a silicone-based pressure-sensitive adhesive, a polyester-based pressure-sensitive adhesive, a urethane-based pressure-sensitive adhesive, an epoxy-based pressure-sensitive adhesive, and a polyether-based pressure-sensitive adhesive. A pressure-sensitive adhesive having desired characteristics in accordance with purposes may be prepared by adjusting, for example, the kinds, number, combination, and blending ratios of monomers for forming the base resin of the pressure-sensitive adhesive, and the blending amount of a cross-linking agent, a reaction temperature, and a reaction time. The base resins of the pressure-sensitive adhesive may be used alone or in combination thereof. An acrylic resin is preferably used as the base resin.

The state of the adhesive irreversibly changes from a liquid to a solid in a process for the formation of an adhesive layer. The adhesive has fluidity at the time of its application, and has such a property as to be cured by curing treatment (e.g., active energy ray irradiation or heating). A curable adhesive is preferably used as the adhesive. Specifically, the adhesive layer is preferably a cured layer of a resin. A UV-curable adhesive is preferably used as the curable adhesive.

The above-mentioned UV-curable adhesive contains, as a curable monomer, a curable monomer, such as a compound having a (meth)acryloyl group or a compound having a vinyl group. A compound having a (meth)acryloyl group is preferably used. The term "(meth)acryloyl group" as used herein refers to an acryloyl group and/or a methacryloyl group.

The thickness of the adhesive layer in the above-mentioned retardation member is, for example, 0.5 μm or more and 3 μm or less, preferably 2 μm or less, more preferably 1.3 μm or less, still more preferably 1.1 μm or less, particularly preferably 0.9 μm or less. Such thickness can provide an optical laminate extremely excellent in smoothness.

The above-mentioned optical laminate may further include a member (so-called positive C-plate) whose refractive index characteristic may show the relationship of nz>nx=ny. The positive C-plate may be arranged on, for example, the side (i.e., viewer side) of the retardation member opposite to the polarizing member. The arrangement of the positive C-plate can provide such an optical laminate that the ellipticity of emitted light is higher.

The thickness direction retardation Rth(550) of the positive C-plate is preferably from -20 nm to -200 nm, more preferably from -30 nm to -180 nm, still more preferably from - 40 nm to -160 nm, particularly preferably from -50 nm to -140 nm. The equation "nx=ny" as used herein encompasses not only a case in which the nx and the ny are strictly equal to each other but also a case in which the nx and the ny are substantially equal to each other. The in-plane retardation Re(550) of the positive C-plate is, for example, less than 10 nm.

The positive C-plate is formed from any appropriate material that can satisfy the above-mentioned characteristics. The positive C-plate may be, for example, a resin film or an alignment fixed layer of a liquid crystal compound.

A material for the resin film for forming the positive C-plate is typically, for example, a resin material having negative birefringence. The resin having negative birefringence is a resin showing the following property: when the resin is uniaxially stretched, its refractive index in a direction perpendicular to the stretching direction becomes maximum. The resin having negative birefringence is, for example, a resin having introduced into a side chain thereof a chemical bond or functional group having large polarization anisotropy, such as an aromatic ring or a carbonyl group. Specific examples of the resin having negative birefringence include an acrylic resin, a styrene-based resin, a maleimide-based resin, a modified polyolefin-based resin, and a fumaric acid ester-based resin. As specific examples thereof, reference may be made to resins each having negative birefringence, the resins being described in, for example, JP 2021-076759 A, JP 2008-544304 A, and JP 2008-544317 A. The above-mentioned resin materials may be used alone or in combination thereof.

The resin film for forming the positive C-plate may further contain any appropriate additive as required. Specific examples of the additive include a plasticizer, a heat stabilizer, a light stabilizer, a lubricant, an antioxidant, a UV absorber, a flame retardant, a colorant, an antistatic agent, a compatibilizer, a cross-linking agent, and a thickener. The kind and content of the additive may be appropriately set in accordance with purposes. The content of the additive in the resin film is, for example, from about 3 wt% to about 10 wt%.

In one embodiment, after the above-mentioned resin material has been formed into a film shape, the film may be used as it is as the positive C-plate. Specifically, the formed film may be used as it is as the positive C-plate without being

stretched. For example, when a resin solution containing the above-mentioned resin material is applied to a support and is formed into a film (by a solution film-forming method), a stress is caused by volume shrinkage at the time of the drying of the resin solution on the support, and hence the molecular chain of a polymer in the solution tends to be aligned in an in-plane direction. When a resin material having a high birefringence-expressing property and having negative intrinsic birefringence is used, a coating film having large thickness direction birefringence can be formed on the support by the shrinking action at the time of the drying. Then, the formed coating film may be used as it is as the positive C-plate.

The thickness of the positive C-plate including the resin film is, for example, from 1 μm to 40 μm, preferably from 3 μm to 35 μm, more preferably from 5 μm to 30 μm.

The alignment fixed layer of the liquid crystal compound for forming the positive C-plate may be preferably, for example, an alignment fixed layer of a liquid crystal material fixed in homeotropic alignment. The liquid crystal material (liquid crystal compound) that can be homeotropically aligned may be a liquid crystal monomer or a liquid crystal polymer. Such liquid crystal compound and a method of forming the positive C-plate are specifically, for example, a liquid crystal compound and a method of forming the retardation layer described in paragraphs [0020] to [0028] of JP 2002-333642 A.

The thickness of the positive C-plate including the alignment fixed layer of the liquid crystal compound is preferably from 0.5 μm to 10 μm, more preferably from 0.5 μm to 8 μm, still more preferably from 0.5 μm to 5 μm.

The above-mentioned optical laminate may include a protective member. The protective member may be arranged on the outermost side opposite to the polarizing member.

The protective member preferably includes a laminated film including a substrate and a surface-treated layer formed on the substrate. The thickness of the laminated film is preferably from 10 μm to 80 μm, more preferably from 15 μm to 60 μm, still more preferably from 20 μm to 45 μm. The thickness of the surface-treated layer is preferably from 0.5 μm to 10 μm, more preferably from 1 μm to 7 μm, still more preferably from 2 μm to 5 μm.

The surface-treated layer typically includes a hard coat layer. The hard coat layer is typically formed by applying a hard coat layer-forming material to the substrate and curing the applied layer. The hard coat layer-forming material typically contains a curable compound serving as a layer-forming component. The mechanism via which the curable compound is cured is, for example, a heat-curing type or a photocuring type. Examples of the curable compound include a monomer, an oligomer, and a prepolymer. A polyfunctional monomer or oligomer is preferably used as the curable compound. Examples of the polyfunctional monomer or oligomer include: a monomer or oligomer having two or more (meth)acryloyl groups; urethane (meth)acrylate or an oligomer of urethane (meth)acrylate; an epoxy-based monomer or oligomer; and a silicone-based monomer or oligomer.

The thickness of the hard coat layer is preferably from 0.5 μm to 10 μm, more preferably from 1 μm to 7 μm, still more preferably from 2 μm to 5 μm.

The surface-treated layer preferably includes a functional layer. The functional layer preferably functions as an antireflection layer. In a preferred embodiment, the surface-treated layer includes the above-mentioned hard coat layer and the antireflection layer in the stated order from the above-mentioned substrate side. The thickness of the functional layer is preferably from 0.05 μm to 10 μm, more preferably from 0.1 μm to 5 μm, still more preferably from 0.1 μm to 2 μm.

The protective member including the surface-treated layer may be arranged so that the surface-treated layer may be positioned on a front side. Specifically, the surface-treated layer may be positioned on the outermost surface of the optical laminate. In one embodiment, the maximum value of the 5° specular reflectance spectrum of the surface-treated layer-side surface of the protective member in the wavelength range of from 420 nm to 680 nm is preferably 2.0% or less, more preferably 1.2% or less, still more preferably 1.0% or less, particularly preferably 0.8% or less. Herein, the 5° specular reflectance of the surface may be measured, for example, as follows: the measurement object is bonded to a black acrylic plate with a pressure-sensitive adhesive to produce a measurement sample; and the 5° specular reflectance is measured by using a spectrophotometer (manufactured by Hitachi High-Technologies Corporation, product name: "U-4100") as a measurement apparatus while setting the incident angle of light with respect to the measurement sample to 5°.

## Examples

The present invention is specifically described below by way of Examples. However, the present invention is by no means limited to these Examples. Test and evaluation methods in Examples and the like are as described below. The term "part(s)" means "part(s) by weight" unless otherwise stated, and the term "%" means "wt%" unless otherwise stated.

### (1) Thickness

A thickness of 10 μm or less was measured with a scanning electron microscope (manufactured by JEOL Ltd., product name: "JSM-7100F"). A thickness of more than 10 μm was measured with a digital micrometer (manufactured by Anritsu Corporation, product name: "KC-351C").

(2) In-plane Retardation Re(λ)

The widthwise direction central portion of a retardation film and both the widthwise direction end portions thereof were cut into a square shape measuring 50 mm wide by 50 mm long so that one side thereof was parallel to the widthwise direction of the film. Thus, a sample was produced. The in-plane retardation of the sample at 23°C and each wavelength was measured with a Mueller matrix polarimeter (manufactured by Axometrics, Inc., product name: "AxoScan").

(3) Single Layer Transmittance and Polarization Degree of Polarizing Film

The single layer transmittance Ts, parallel transmittance Tp, and cross transmittance Tc of a polarizing film were measured with a spectrophotometer (manufactured by Otsuka Electronics Co., Ltd., "LPF-200"). The Ts, the Tp, and the Tc are each a Y value measured with the two-degree field of view (C light source) of JIS Z 8701 and subjected to visibility correction. The polarization degree of the polarizing film was determined from the Tp and the Tc thus obtained by using the following equation.

$$\text{Polarization degree (\%)} = \{(Tp-Tc)/(Tp+Tc)\}^{1/2} \times 100$$

(4) Surface Smoothness

The smoothness of a retardation film was measured with a phase-shifting laser interferometer (manufactured by Zygo Corporation, product name: "DynaFiz"). Specifically, the retardation film was laminated on microslide glass (manufactured by Matsunami Glass Ind., Ltd., product name: "S200200") so as to prevent foreign matter, air bubbles, or deformation streaks from being introduced. Next, to remove an influence of fine air bubbles, the laminate was subjected to defoaming with a pressure defoaming apparatus (autoclave). The defoaming was performed under the conditions of 50°C, 0.5 MPa, and 30 minutes. After the defoaming, the laminate was left standing to cool at room temperature for 30 minutes or more to provide a measurement sample.

The measurement sample was mounted on a measuring table with a vibration isolator, and was caused to interfere with a reference, whose flatness had been assured, by using a laser having a single wavelength (wavelength: 633 nm), followed by the measurement of its relative displacement in a predetermined region (circle having a diameter of 30 mm). With regard to analysis, a value (corresponding to 2σ) obtained by doubling an angle indicator "Slope magnitude RMS," which was obtained by extracting a frequency value of from 0.1/mm to 1/mm, was defined as the smoothness (unit: arcmin) of the retardation film.

[Production Example 1-1: Production of Retardation Film 1]

29.60 Parts by weight (0.046 mol) of bis[9-(2-phenoxycarbonylethyl)fluoren-9-yl]methane, 29.21 parts by weight (0.200 mol) of isosorbide (ISB), 42.28 parts by weight (0.139 mol) of spiroglycol (SPG), 63.77 parts by weight (0.298 mol) of diphenyl carbonate (DPC), and $1.19\times10^{-2}$ part by weight ($6.78\times10^{-5}$ mol) of calcium acetate monohydrate serving as a catalyst were loaded into a batch polymerization apparatus formed of two vertical reactors each including a stirring blade and a reflux condenser controlled to 100°C. After the inside of each of the reactors had been purged with nitrogen under reduced pressure, the inside was warmed with a heat medium, and stirring was started at the time point when the internal temperature became 100°C. 40 Minutes after the start of the temperature increase, the internal temperature was caused to reach 220°C, and such control that the temperature was held was performed. At the same time, a pressure reduction was started, and a pressure in each of the reactors was set to 13.3 kPa in 90 minutes after the temperature had reached 220°C. Phenol vapor produced as a by-product along with a polymerization reaction was introduced into the reflux condenser at 100°C, a monomer component present in a trace amount in the phenol vapor was returned to the reactor, and the phenol vapor that did not condense was introduced into a condenser at 45°C and recovered. Nitrogen was introduced into the first reactor to return the pressure therein to the atmospheric pressure once, and then an oligomerized reaction liquid in the first reactor was transferred to the second reactor. Next, a temperature increase and a pressure reduction in the second reactor were started, and the internal temperature and the pressure were set to 240°C and 0.2 kPa, respectively in 50 minutes. After that, the polymerization was advanced until predetermined stirring power was obtained. At the time point when the predetermined power was achieved, nitrogen was introduced into the reactor to return the pressure, and the produced polyester carbonate-based resin was extruded into water, followed by the cutting of a strand. Thus, a pellet was obtained.

The resultant polyester carbonate-based resin (pellet) was dried in a vacuum at 80°C for 5 hours, and then an elongate resin film having a thickness of 130 μm was produced from the resin with a film-forming apparatus including a single-screw extruder (manufactured by Toshiba Machine Co., Ltd., cylinder set temperature: 250°C), a T-die (width: 200 mm, set temperature: 250°C), a chill roll (set temperature: from 120°C to 130°C), and a winding machine. The resultant

elongate resin film was stretched in its widthwise direction at a stretching temperature of 140°C and a stretching ratio of 2.7 times.

Thus, a retardation film 1 (λ/4 plate) having a thickness of 47 μm, an Re(590) of 140 nm, and an Nz coefficient of 1.2 was obtained. The resultant retardation film 1 had a ratio "Re(450)/Re(550)" of 0.856, and hence showed a reverse wavelength dispersion characteristic.

In addition, the surface smoothness of the film was 0.25 arcmin.

[Production Example 1-2: Production of Retardation Film 2]

A polyester carbonate-based resin (pellet) was obtained in the same manner as in Production Example 1-1.

The resultant polyester carbonate-based resin (pellet) was dried in a vacuum at 80°C for 5 hours, and then an elongate resin film having a thickness of 260 μm was produced from the resin with a film-forming apparatus including a single-screw extruder (manufactured by Toshiba Machine Co., Ltd., cylinder set temperature: 250°C), a T-die (width: 200 mm, set temperature: 250°C), a chill roll (set temperature: from 120°C to 130°C), and a winding machine. The resultant elongate resin film was stretched in its widthwise direction at a stretching temperature of 140°C and a stretching ratio of 2.7 times.

Thus, a retardation film 2 (λ/2 plate) having a thickness of 91 μm, an Re(590) of 270 nm, and an Nz coefficient of 1.2 was obtained. The resultant retardation film 2 had a ratio "Re(450)/Re(550)" of 0.859, and hence showed a reverse wavelength dispersion characteristic.

In addition, the surface smoothness of the film was 0.35 arcmin.

[Production Example 1-3: Production of Retardation Layer (Alignment Fixed Layer of Liquid Crystal Compound) 3]

55 Parts by weight of a compound represented by the formula (I), 25 parts by weight of a compound represented by the formula (II), and 20 parts by weight of a compound represented by the formula (III) were added to 400 parts by weight of cyclopentanone (CPN). After that, the mixture was warmed to 60°C, and was stirred so that the compounds were dissolved in CPN. After that, the temperature of the solution of the above-mentioned compounds was returned to room temperature. 3 Parts by weight of IRGACURE 907 (manufactured by BASF Japan Ltd.), 0.2 part by weight of MEGAFACE F-554 (manufactured by DIC Corporation), and 0.1 part by weight of p-methoxyphenol (MEHQ) were added to the solution of the above-mentioned compounds, and the mixture was further stirred. The solution after the stirring was transparent and uniform. The resultant solution was filtered with a 0.20-micrometer membrane filter to provide a polymerizable composition.

In addition, a polyimide solution for an alignment film was applied to a glass substrate having a thickness of 0.7 mm by using a spin coating method, and was dried at 100°C for 10 minutes, followed by calcination at 200°C for 60 minutes. Thus, a coating film was obtained. The resultant coating film was subjected to rubbing treatment with a commercial rubbing apparatus to form an alignment film.

Next, the polymerizable composition obtained in the foregoing was applied to the substrate (substantially, the alignment film) by a spin coating method, and was dried at 100°C for 2 minutes. The resultant coating film was cooled to room temperature, and was then irradiated with UV light at an intensity of 30 mW/cm$^2$ for 30 seconds by using a high-pressure mercury lamp. Thus, a retardation layer (thickness: 3 μm) serving as an alignment fixed layer of a liquid crystal compound was obtained. The retardation layer had an in-plane retardation Re(590) of 140 nm. In addition, the retardation layer had a ratio "Re(450)/Re(550)" of 0.851, and hence showed a reverse wavelength dispersion characteristic. The retardation layer can function as a λ/4 plate.

In addition, the surface smoothness of the retardation layer was 0.16 arcmin.

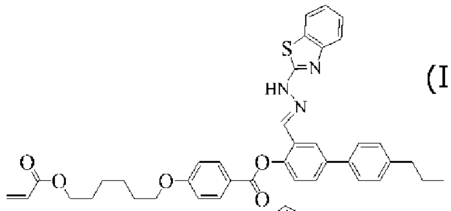

(I)

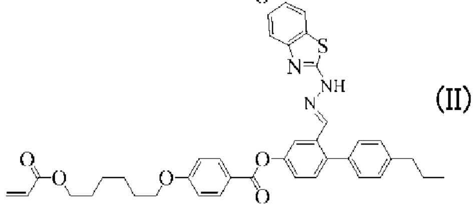

(II)

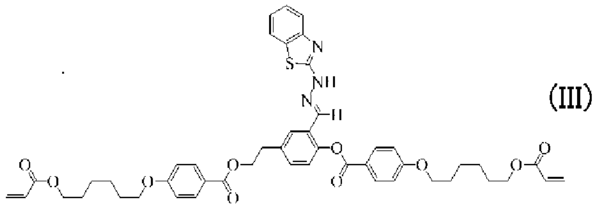

(III)

[Production Example 1-4: Production of Retardation Layer (Alignment Fixed Layer of Liquid Crystal Compound) 4]

A retardation layer was obtained in the same manner as in Production Example 1-3 except that the thickness of the retardation layer was changed to 6 μm. The retardation layer had an in-plane retardation Re(590) of 270 nm. In addition, the retardation layer had a ratio "Re(450)/Re(550)" of 0.851, and hence showed a reverse wavelength dispersion characteristic. The retardation layer can function as a λ/2 plate.

In addition, the surface smoothness of the retardation layer was 0.22 arcmin.

[Production Example 1-5: Production of Retardation Film 5]

An elongate norbornene-based resin film (manufactured by Zeon Corporation, product name: Zeonor, thickness: 40 μm) was subjected to free-end longitudinal stretching while a stretching ratio and a stretching temperature were adjusted so that an in-plane retardation Re(590) of 140 nm was obtained. Thus, a retardation film 5 (λ/4 plate) having a thickness of 33 μm was produced. The retardation film 5 thus obtained had refractive indices satisfying the relationship of nx>ny=nz. In addition, the retardation film had a ratio "Re(450)/Re(550)" of 1.004, and hence showed a roughly flat wavelength dispersion characteristic.

In addition, the surface smoothness of the film was 0.32 arcmin.

[Production Example 1-6: Production of Retardation Film 6]

An elongate norbornene-based resin film (manufactured by Zeon Corporation, product name: Zeonor, thickness: 50 μm) was subjected to free-end longitudinal stretching while a stretching ratio and a stretching temperature were adjusted so that an in-plane retardation Re(590) of 270 nm was obtained. Thus, a retardation film 6 (λ/2 plate) having a thickness of 33 μm was produced. The retardation film 6 thus obtained had refractive indices satisfying the relationship of nx>ny=nz. In addition, the retardation film had a ratio "Re(450)/Re(550)" of 1.004, and hence showed a roughly flat wavelength dispersion characteristic.

In addition, the surface smoothness of the film was 0.42 arcmin.

[Production Example 1-7: Production of Retardation Layer (Alignment Fixed Layer of Liquid Crystal Compound) 7]

10 Grams of a polymerizable liquid crystal compound showing a nematic liquid crystal phase (manufactured by BASF SE: product name: "Paliocolor LC242") and 3 g of a photopolymerization initiator (manufactured by BASF SE: product name: "IRGACURE 907") for the polymerizable liquid crystal compound were dissolved in 40 g of toluene to prepare a liquid crystal composition (application liquid).

The surface of a polyethylene terephthalate (PET) film (thickness: 38 μm) was subjected to alignment treatment

by being rubbed with a rubbing cloth.

The above-mentioned liquid crystal application liquid was applied to the alignment-treated surface with a bar coater, and was dried under heating at 90°C for 2 minutes. Thus, the liquid crystal compound was aligned.

Light having an integrated light quantity of 1 mJ/cm$^2$ was applied to a liquid crystal layer thus formed by using a metal halide lamp to cure the liquid crystal layer. Thus, a retardation layer serving as a liquid crystal alignment fixed layer was formed on the PET film.

The retardation layer had a thickness of 1.5 μm and an in-plane retardation Re(590) of 140 nm.

Further, the retardation layer showed a refractive index characteristic of nx>ny=nz. In addition, the retardation layer had a ratio "Re(450)/Re(550)" of 1.089, and hence showed a positive wavelength dispersion characteristic. The retardation layer can function as a λ/4 plate.

In addition, the surface smoothness of the layer was 0.18 arcmin.

[Production Example 1-8: Production of Retardation Layer (Alignment Fixed Layer of Liquid Crystal Compound) 8]

A retardation layer having an in-plane retardation Re(590) of 270 nm was obtained in the same manner as in Production Example 1-7 except that the thickness of the retardation layer was changed to 2.5 μm. The retardation layer showed a refractive index characteristic of nx>ny=nz. In addition, the retardation layer had a ratio "Re(450)/Re(550)" of 1.089, and hence showed a positive wavelength dispersion characteristic. The retardation layer can function as a λ/2 plate.

[Production Example 1-9: Production of Retardation Film (Positive C-plate) 9]

48 Parts by weight of hydroxypropyl methylcellulose (manufactured by Shin-Etsu Chemical Co., Ltd., product name: METOLOSE 60SH-50), 15,601 parts by weight of distilled water, 8,161 parts by weight of diisopropyl fumarate, 240 parts by weight of 3-ethyl-3-oxetanyl methyl acrylate, and 45 parts by weight of t-butyl peroxypivalate serving as a polymerization initiator were loaded into an autoclave including a stirring machine, a cooling tube, a nitrogen-introducing tube, and a temperature gauge, and the mixture was subjected to nitrogen bubbling for 1 hour. After that, radical suspension polymerization was performed by holding the mixture at 49°C for 24 hours while stirring the mixture.

Next, the resultant was cooled to room temperature, and a suspension containing polymer particles thus produced was centrifuged. The resultant polymer was washed with distilled water twice and with methanol twice, and was then dried under reduced pressure. The resultant fumaric acid ester-based resin was dissolved in a mixed solution of toluene and methyl ethyl ketone (toluene/methyl ethyl ketone: 50 wt%/50 wt%) to provide a 20% solution.

Further, 5 parts by weight of tributyl trimellitate was added as a plasticizer to 100 parts by weight of the fumaric acid ester-based resin to prepare a dope.

A biaxially stretched film (thickness: 75 μm) of a polyester (polyethylene-terephthalate/isophthalate copolymer) was used as a support film. The prepared dope was applied to the support film so that its thickness after drying became 20 μm, followed by drying at 140°C.

The coating film (positive C-plate) after the drying had an Re(590) of nearly 0 nm and an Rth(590) of -83 nm. In addition, the retardation film had a ratio "Rth(450)/Rth(550)" of 1.012, and hence showed a positive wavelength dispersion characteristic.

[Production Example 2: Production of Polarizing Film]

An amorphous isophthalic acid-copolymerized polyethylene terephthalate film (thickness: 100 μm) having an elongate shape, the film having a Tg of about 75°C, was used as a thermoplastic resin substrate, and one surface of the resin substrate was subjected to corona treatment.

A PVA aqueous solution (application liquid) was prepared by: adding 13 parts by weight of potassium iodide to 100 parts by weight of a PVA-based resin obtained by mixing polyvinyl alcohol (polymerization degree: 4,200, saponification degree: 99.2 mol%) and acetoacetyl-modified PVA (manufactured by Mitsubishi Chemical Corporation, product name: "GOHSENX Z410") at a ratio of 9:1; and dissolving the mixture in water.

The above-mentioned PVA aqueous solution was applied to the corona-treated surface of the resin substrate, and was dried at 60°C to form a PVA-based resin layer having a thickness of 13 μm. Thus, a laminate was produced.

The resultant laminate was subjected to uniaxial stretching at a ratio of 2.4 times in its longitudinal direction (lengthwise direction) in an oven at 130°C (in-air auxiliary stretching treatment).

Next, the laminate was immersed in an insolubilizing bath having a liquid temperature of 40°C (an aqueous solution of boric acid obtained by blending 100 parts by weight of water with 4 parts by weight of boric acid) for 30 seconds (insolubilizing treatment).

Next, the laminate was immersed in a dyeing bath having a liquid temperature of 30°C (an aqueous solution of iodine obtained by blending 100 parts by weight of water with iodine and potassium iodide at a weight ratio of 1:7) for 60

seconds while the concentration was adjusted so that the single layer transmittance (Ts) of an absorption-type polarizer to be finally obtained became a desired value (dyeing treatment).

Next, the laminate was immersed in a cross-linking bath having a liquid temperature of 40°C (an aqueous solution of boric acid obtained by blending 100 parts by weight of water with 3 parts by weight of potassium iodide and 5 parts by weight of boric acid) for 30 seconds (cross-linking treatment).

After that, while the laminate was immersed in an aqueous solution of boric acid having a liquid temperature of 70°C (boric acid concentration: 4 wt%, potassium iodide concentration: 5 wt%), the laminate was subjected to uniaxial stretching between rolls having different peripheral speeds in its longitudinal direction (lengthwise direction) so that the total stretching ratio became 5.5 times (underwater stretching treatment).

After that, the laminate was immersed in a washing bath having a liquid temperature of 20°C (an aqueous solution obtained by blending 100 parts by weight of water with 4 parts by weight of potassium iodide) (washing treatment).

After that, the laminate was brought into contact with SUS-made heated rolls, whose surface temperature was kept at about 75°C, while being dried in an oven kept at about 90°C (drying shrinkage treatment). The shrinkage ratio of the laminate in its widthwise direction by the drying shrinkage treatment was 5.2%.

Thus, an absorption-type polarizer having a thickness of about 5 μm was formed on the resin substrate.

A cycloolefin-based resin film (thickness: 25 μm) serving as a protective layer was bonded to the surface (surface opposite to the resin substrate) of the resultant absorption-type polarizer via a UV-curable adhesive. Specifically, the curable adhesive was applied so that its total thickness became about 1 μm, followed by the bonding with a roller machine. After that, a UV ray was applied from the cycloolefin-based resin film side to cure the adhesive. Next, the resin substrate was peeled.

Thus, a polarizing film having the configuration "cycloolefin-based resin film/absorption-type polarizer" was obtained. The polarizing film had a single layer transmittance (Ts) of 43.4% and a polarization degree of 99.993%.

[Example 1]

The polarizing film obtained in Production Example 2, the retardation film 2 (λ/2 plate), and the retardation film 1 (λ/4 plate) were laminated in the stated order to provide an optical laminate.

Films adjacent to each other were overlapped on each other via an acrylic pressure-sensitive adhesive layer (manufactured by Nitto Denko Corporation, thickness: 5 μm). In the overlapping, a relationship between the slow axis of each of the retardation films and the absorption axis of the polarizing film was set as follows: in the case where the absorption axis direction of the polarizing film when viewed from the retardation film 1 (λ/4 plate) was defined as a reference (0°), the angle of the slow axis direction of the retardation film 2 (λ/2 plate) was set to 15°, and the angle of the slow axis direction of the retardation film 1 (λ/4 plate) was set to 75°.

[Example 2]

The polarizing film obtained in Production Example 2, the retardation layer 4 (λ/2 plate), and the retardation layer 3 (λ/4 plate) were laminated to provide an optical laminate.

Elements adjacent to each other were overlapped on each other via an acrylic pressure-sensitive adhesive layer (manufactured by Nitto Denko Corporation, thickness: 5 μm). In the overlapping, a relationship between the slow axis of each of the retardation layers and the absorption axis of the polarizing film was set as follows: in the case where the absorption axis direction of the polarizing film when viewed from the retardation layer 3 (λ/4 plate) was defined as a reference (0°), the angle of the slow axis direction of the retardation layer 4 (λ/2 plate) was set to 15°, and the angle of the slow axis direction of the retardation layer 3 (λ/4 plate) was set to 75°.

[Example 3]

The polarizing film obtained in Production Example 2, the retardation film 2 (λ/2 plate), the retardation film 1 (λ/4 plate), and the retardation film 9 were laminated to provide an optical laminate.

Elements adjacent to each other were overlapped on each other via an acrylic pressure-sensitive adhesive layer (manufactured by Nitto Denko Corporation, thickness: 5 μm). In the overlapping, a relationship between the slow axis of each of the retardation films and the absorption axis of the polarizing film was set as follows: in the case where the absorption axis direction of the polarizing film when viewed from the retardation film 1 (λ/4 plate) was defined as a reference (0°), the angle of the slow axis direction of the retardation film 2 (λ/2 plate) was set to 15°, and the angle of the slow axis direction of the retardation film 1 (λ/4 plate) was set to 75°.

[Example 4]

The polarizing film obtained in Production Example 2, the retardation layer 4 (λ/2 plate), the retardation layer 3 (λ/4 plate), and the retardation film 9 were laminated to provide an optical laminate.

Elements adjacent to each other were overlapped on each other via an acrylic pressure-sensitive adhesive layer (manufactured by Nitto Denko Corporation, thickness: 5 μm). In the overlapping, a relationship between the slow axis of each of the retardation layers and the absorption axis of the polarizing film was set as follows: in the case where the absorption axis direction of the polarizing film when viewed from the retardation layer 3 (λ/4 plate) was defined as a reference (0°), the angle of the slow axis direction of the retardation layer 4 (λ/2 plate) was set to 15°, and the angle of the slow axis direction of the retardation layer 3 (λ/4 plate) was set to 75°.

[Experimental Example 1]

The polarizing film obtained in Production Example 2, the retardation film 6 (λ/2 plate), and the retardation film 5 (λ/4 plate) were laminated to provide an optical laminate.

Films adjacent to each other were overlapped on each other via an acrylic pressure-sensitive adhesive layer (manufactured by Nitto Denko Corporation, thickness: 5 μm). In the overlapping, a relationship between the slow axis of each of the retardation films and the absorption axis of the polarizing film was set as follows: in the case where the absorption axis direction of the polarizing film when viewed from the retardation film 5 (λ/4 plate) was defined as a reference (0°), the angle of the slow axis direction of the retardation film 6 (λ/2 plate) was set to 15°, and the angle of the slow axis direction of the retardation film 5 (λ/4 plate) was set to 75°.

[Experimental Example 2]

The polarizing film obtained in Production Example 2, the retardation film 6 (λ/2 plate), the retardation film 5 (λ/4 plate), and the retardation film 9 were laminated to provide an optical laminate.

Films adjacent to each other were overlapped on each other via an acrylic pressure-sensitive adhesive layer (manufactured by Nitto Denko Corporation, thickness: 5 μm). In the overlapping, a relationship between the slow axis of each of the retardation films and the absorption axis of the polarizing film was set as follows: in the case where the absorption axis direction of the polarizing film when viewed from the retardation film 5 (λ/4 plate) was defined as a reference (0°), the angle of the slow axis direction of the retardation film 6 (λ/2 plate) was set to 15°, and the angle of the slow axis direction of the retardation film 5 (λ/4 plate) was set to 75°.

[Experimental Example 3]

The polarizing film obtained in Production Example 2, the retardation layer 8 (λ/2 plate), and the retardation layer 7 (λ/4 plate) were laminated to provide an optical laminate.

Elements adjacent to each other were overlapped on each other via an acrylic pressure-sensitive adhesive layer (manufactured by Nitto Denko Corporation, thickness: 5 μm). In the overlapping, a relationship between the slow axis of each of the retardation layers and the absorption axis of the polarizing film was set as follows: in the case where the absorption axis direction of the polarizing film when viewed from the retardation layer 7 (λ/4 plate) was defined as a reference (0°), the angle of the slow axis direction of the retardation layer 8 (λ/2 plate) was set to 15°, and the angle of the slow axis direction of the retardation layer 7 (λ/4 plate) was set to 75°.

[Experimental Example 4]

The polarizing film obtained in Production Example 2, the retardation layer 8 (λ/2 plate), the retardation layer 7 (λ/4 plate), and the retardation film 9 were laminated to provide an optical laminate.

Elements adjacent to each other were overlapped on each other via an acrylic pressure-sensitive adhesive layer (manufactured by Nitto Denko Corporation, thickness: 5 μm). In the overlapping, a relationship between the slow axis of each of the retardation layers and the absorption axis of the polarizing film was set as follows: in the case where the absorption axis direction of the polarizing film when viewed from the retardation layer 7 (λ/4 plate) was defined as a reference (0°), the angle of the slow axis direction of the retardation layer 8 (λ/2 plate) was set to 15°, and the angle of the slow axis direction of the retardation layer 7 (λ/4 plate) was set to 75°.

<Evaluation>

The following evaluations were performed on each of Examples.

1. Ellipticity

Light having a predetermined wavelength (450 nm, 550 nm, or 650 nm) was caused to enter from the polarizing member side of each of the optical laminates at 23°C, and the ellipticity of the light emitted from the retardation member thereof was measured with a Mueller matrix polarimeter (manufactured by Axometrics, Inc., product name: "AxoScan").
The incident angle and emitting angle of the light were each set to a polar angle of 30°, and the ellipticities thereof were measured in azimuth angle increments of 11.25° in the azimuth angle range of from 0° to 360°.
The minimum value and average of 32 measured values, and the number of data in which the ellipticities are 0.85 or more are shown in Table 1.
In addition, the ellipticities of the light were measured while the incident angle and emitting angle thereof were each set to a polar angle of 0°. The measured values are shown in Table 1.

Table 1

| | Minimum value of ellipticities at polar angle of 30° | | | Ellipticity at polar angle of 30° | | | Number of data in which ellipticities are 0.85 or more at polar angle of 30° | | | Ellipticity at polar angle of 0° | | |
|---|---|---|---|---|---|---|---|---|---|---|---|---|
| Measurement wavelength | 450 nm | 550 nm | 650 nm | 450 nm | 550 nm | 650 nm | 450 nm | 550 nm | 650 nm | 450 nm | 550 nm | 650 nm |
| Experimental Example 1 | 0.756 | 0.775 | 0.8 | 0.832 | 0.858 | 0.863 | 10 | 18 | 19 | 0.887 | 0.929 | 0.93 |
| Example 1 | 0.798 | 0.787 | 0.799 | 0.853 | 0.841 | 0.838 | 18 | 12 | 10 | 0.957 | 0.955 | 0.969 |
| Example 2 | 0.83 | 0.814 | 0.839 | 0.866 | 0.865 | 0.869 | 10 | 21 | 27 | 0.976 | 0.981 | 0.978 |
| Experimental Example 3 | 0.743 | 0.764 | 0.741 | 0.772 | 0.817 | 0.82 | 0 | 7 | 10 | 0.978 | 0.938 | 0.861 |
| Experimental Example 2 | 0.762 | 0.827 | 0.859 | 0.834 | 0.891 | 0.902 | 9 | 24 | 32 | 0.878 | 0.927 | 0.926 |
| Example 3 | 0.845 | 0.844 | 0.862 | 0.892 | 0.891 | 0.895 | 30 | 28 | 32 | 0.967 | 0.966 | 0.979 |
| Example 4 | 0.845 | 0.847 | 0.878 | 0.889 | 0.897 | 0.912 | 30 | 31 | 32 | 0.983 | 0.985 | 0.982 |
| Experimental Example 4 | 0.814 | 0.817 | 0.832 | 0.88 | 0.883 | 0.881 | 21 | 22 | 19 | 0.977 | 0.939 | 0.871 |

2. Depolarizability

A depolarization index (DI) was determined from a Mueller matrix represented by the following equation, which had been obtained by causing light having a predetermined wavelength (450 nm, 550 nm, or 650 nm) to enter from the polarizing member side of each of the optical laminates at 23°C with a Mueller matrix polarimeter (manufactured by Axometrics, Inc., product name: "AxoScan"), and the optical laminate was evaluated for its depolarizability on the basis of a value (1-DI) obtained by subtracting the depolarization index (DI) from 1.

$$\begin{pmatrix} m00 & m01 & m02 & m03 \\ m10 & m11 & m12 & m13 \\ m20 & m21 & m22 & m23 \\ m30 & m31 & m32 & m33 \end{pmatrix} \quad \cdots (1)$$

$$DI = 1 - \frac{\sqrt{\left(\sum_{i,j} m_{i,j}^2\right) - m_{00}^2}}{\sqrt{3}\, m_{00}} \quad \cdots (2)$$

As the depolarization indices (DI), the depolarization index (DI) of transmitted light having the predetermined wavelength, the depolarization index being measured at a polar angle of 30° and an azimuth angle of from 0° to 360°, and

the depolarization index (DI) of the transmitted light having the predetermined wavelength, the depolarization index being measured at a polar angle of 0° (front direction), were determined. The average of the depolarization indices of emitted light at a polar angle of 30° measured in azimuth angle increments of 11.25° in the azimuth angle range of from 0° to 360° was used as the depolarization index (DI) of the transmitted light having the predetermined wavelength, the depolarization index being measured at a polar angle of 30° and an azimuth angle of from 0° to 360°.

The results are shown in Table 2.

Table 2

| | (1-DI) at polar angle of 30° (%) | | | (1-DI) at polar angle of 0° (%) | | |
|---|---|---|---|---|---|---|
| Measurement wavelength | 450 nm | 550 nm | 650 nm | 450 nm | 550 nm | 650 nm |
| Experimental Example 1 | 99.612 | 99.698 | 99.720 | 99.772 | 99.751 | 99.851 |
| Example 1 | 99.988 | 100.000 | 100.000 | 100.000 | 100.000 | 100.000 |
| Example 2 | 99.602 | 99.657 | 99.781 | 99.777 | 99.741 | 99.699 |
| Experimental Example 3 | 99.939 | 100.000 | 100.000 | 100.000 | 100.000 | 100.000 |
| Experimental Example 2 | 99.598 | 99.693 | 99.726 | 99.721 | 99.734 | 99.785 |
| Example 3 | 99.991 | 100.000 | 100.000 | 100.000 | 100.000 | 100.000 |
| Example 4 | 99.683 | 99.679 | 99.696 | 99.767 | 99.717 | 99.711 |
| Experimental Example 4 | 100.000 | 100.000 | 100.000 | 100.000 | 100.000 | 100.000 |

Industrial Applicability

The display system according to the embodiment of the present invention may be used in, for example, a display body such as a pair of VR goggles.

Reference Signs List

**2** display system
**10** polarizing member
**12** display element
**14** reflecting portion
**16** first lens portion
**18** half mirror
**20** first retardation member
**22** second retardation member
**24** second lens portion
**200** optical laminate

## Claims

**1.** A display system configured to display an image to a user, comprising:

a display element having a display surface configured to emit light representing the image to a front side through a polarizing member;
a reflecting portion, which is arranged on a front side of the display element and includes a reflection-type polarizing member, the reflecting portion being configured to reflect the light emitted from the display element;
a first lens portion arranged on an optical path between the display element and the reflecting portion;
a half mirror arranged between the display element and the first lens portion, the half mirror being configured to transmit the light emitted from the display element and to reflect the light reflected by the reflecting portion toward the reflecting portion;
a first retardation member arranged on an optical path between the display element and the half mirror; and

a second retardation member arranged on an optical path between the half mirror and the reflecting portion,
wherein the polarizing member and the first retardation member form an optical laminate, and in the optical laminate, transmitted light having a wavelength of 550 nm has an ellipticity of 0.77 or more, which is measured at a polar angle of 30° and an azimuth angle of from 0° to 360°.

**2.** An optical laminate, comprising:

a polarizing member; and
a retardation member arranged on one side of the polarizing member,
wherein transmitted light having a wavelength of 550 nm has an ellipticity of 0.77 or more, which is measured at a polar angle of 30° and an azimuth angle of from 0° to 360°.

**3.** The optical laminate according to claim 2, wherein transmitted light having a wavelength of 450 nm has an ellipticity of 0.77 or more, which is measured at a polar angle of 30° and an azimuth angle of from 0° to 360°.

**4.** The optical laminate according to claim 2, wherein transmitted light having a wavelength of 650 nm has an ellipticity of 0.77 or more, which is measured at a polar angle of 30° and an azimuth angle of from 0° to 360°.

**5.** The optical laminate according to claim 2, wherein when ellipticities of the transmitted light having a wavelength of 550 nm are measured at a polar angle of 30° in azimuth angle increments of 11.25° in an azimuth angle range of from 0° to 360°, an average of the ellipticities is 0.83 or more.

**6.** The optical laminate according to claim 2, wherein when ellipticities of transmitted light having a wavelength of 450 nm are measured at a polar angle of 30° in azimuth angle increments of 11.25° in an azimuth angle range of from 0° to 360°, an average of the ellipticities is 0.80 or more.

**7.** The optical laminate according to claim 2, wherein when ellipticities of transmitted light having a wavelength of 650 nm are measured at a polar angle of 30° in azimuth angle increments of 11.25° in an azimuth angle range of from 0° to 360°, an average of the ellipticities is 0.80 or more.

**8.** The optical laminate according to claim 2, wherein when ellipticities of the transmitted light having a wavelength of 550 nm are measured at a polar angle of 30° in azimuth angle increments of 11.25° in an azimuth angle range of from 0° to 360°, the number of data in which the ellipticities are 0.85 or more is 10 or more.

**9.** The optical laminate according to claim 2, wherein when ellipticities of transmitted light having a wavelength of 450 nm are measured at a polar angle of 30° in azimuth angle increments of 11.25° in an azimuth angle range of from 0° to 360°, the number of data in which the ellipticities are 0.85 or more is 10 or more.

**10.** The optical laminate according to claim 2, wherein when ellipticities of transmitted light having a wavelength of 650 nm are measured at a polar angle of 30° in azimuth angle increments of 11.25° in an azimuth angle range of from 0° to 360°, the number of data in which the ellipticities are 0.85 or more is 10 or more.

**11.** The optical laminate according to claim 2, wherein the transmitted light having a wavelength of 550 nm has an ellipticity of 0.94 or more, which is measured at a polar angle of 0°.

**12.** The optical laminate according to claim 2, wherein transmitted light having a wavelength of 450 nm has an ellipticity of 0.94 or more, which is measured at a polar angle of 0°.

**13.** The optical laminate according to claim 2, wherein transmitted light having a wavelength of 650 nm has an ellipticity of 0.94 or more, which is measured at a polar angle of 0°.

**14.** The optical laminate according to claim 2, wherein a value (1-DI) obtained by subtracting a depolarization index (DI) of the transmitted light having a wavelength of 550 nm, the depolarization index being measured at a polar angle of 0°, from 1 is 99.5% or more.

**15.** The optical laminate according to claim 2, wherein a value (1-DI) obtained by subtracting a depolarization index (DI) of the transmitted light having a wavelength of 550 nm, the depolarization index being measured at a polar angle of 30° and an azimuth angle of from 0° to 360°, from 1 is 99.4% or more.

**16.** The optical laminate according to claim 2, wherein the optical laminate is used in a display method including the steps of:

passing light representing an image, which has been emitted through the polarizing member, through a first retardation member;
passing the light, which has passed through the first retardation member, through a half mirror and a first lens portion;
passing the light, which has passed through the half mirror and the first lens portion, through a second retardation member;
reflecting the light, which has passed through the second retardation member, toward the half mirror with a reflection-type polarizing member; and
enabling the light, which has been reflected by the reflection-type polarizing member and the half mirror, to penetrate through the reflection-type polarizing member with the second retardation member.

Fig.1

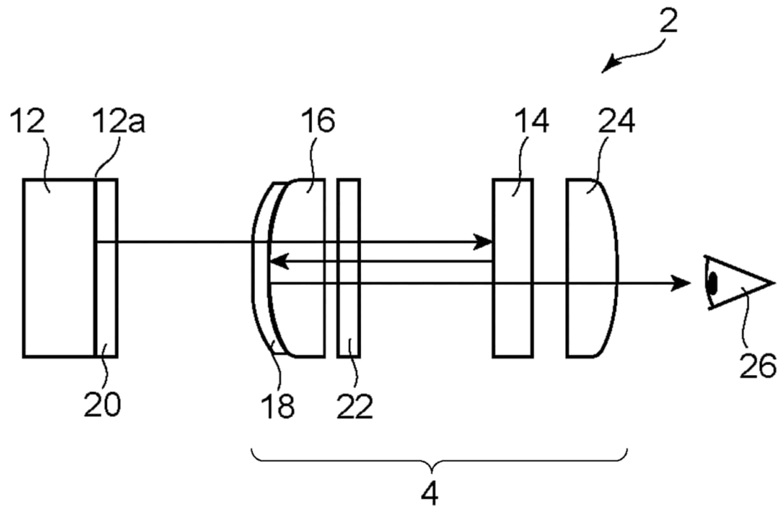


Fig.2

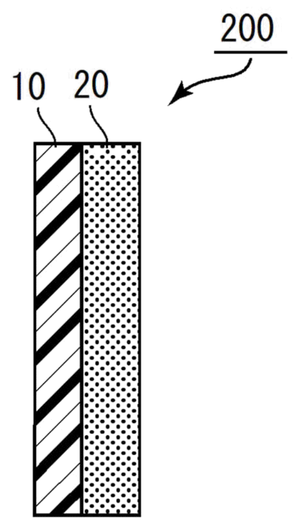

Fig.3

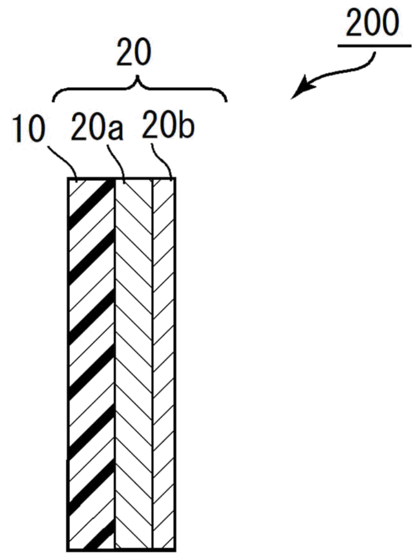

**INTERNATIONAL SEARCH REPORT**

International application No.
**PCT/JP2024/028997**

**A. CLASSIFICATION OF SUBJECT MATTER**

***G02B 27/02***(2006.01)i; ***B32B 7/023***(2019.01)i; ***G02B 5/30***(2006.01)i; ***G09F 9/00***(2006.01)i
FI: G02B27/02 Z; B32B7/023; G09F9/00 313; G02B5/30

According to International Patent Classification (IPC) or to both national classification and IPC

**B. FIELDS SEARCHED**

Minimum documentation searched (classification system followed by classification symbols)

G02B27/02; G02B27/01; B32B7/023; G02B5/30; G09F9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-526075 A (APPLE INC.) 12 September 2019 (2019-09-12) paragraphs [0021]-[0053], fig. 2 | 1-16 |
| Y | JP 10-10465 A (SHARP KABUSHIKI KAISHA) 16 January 1998 (1998-01-16) paragraphs [0027]-[0045], fig. 28-37 | 1-16 |
| Y | US 2023/0035051 A1 (SAMSUNG SDI CO., LTD.) 02 February 2023 (2023-02-02) paragraph [0019] | 14, 15 |
| A | WO 2021/145446 A1 (FUJIFILM CORPORATION) 22 July 2021 (2021-07-22) entire text, all drawings | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/028997**

| Patent document cited in search report | Publication date (day/month/year) | Patent family member(s) | Publication date (day/month/year) |
|---|---|---|---|
| JP 2019-526075 A | 12 September 2019 | WO 2018/026633 A1<br>paragraphs [0021]-[0053], fig. 2<br>US 2018/0039052 A1<br>US 2019/0146198 A1<br>US 2020/0166738 A1<br>US 2021/0132349 A1<br>US 2023/0333359 A1<br>EP 4318080 A2<br>KR 10-2019-0020826 A<br>CN 110268301 A<br>CN 110703444 A<br>CN 114740621 A | |
| JP 10-10465 A | 16 January 1998 | EP 803756 A1<br>page 10, line 16 to page 11, line 42, fig. 12-21<br>US 5966242 A | |
| US 2023/0035051 A1 | 02 February 2023 | WO 2021/141289 A1<br>paragraph [0025]<br>KR 10-2021-0089047 A<br>CN 114930207 A | |
| WO 2021/145446 A1 | 22 July 2021 | US 2022/0373729 A1<br>entire text, all drawings<br>CN 114945856 A<br>CN 118068574 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021103286 A
- JP 2014010291 A
- JP 2014026266 A
- JP 2015212816 A
- JP 2015212817 A
- JP 2015212818 A
- JP 2006163343 A
- JP 2006178389 A
- WO 2018123551 A1
- JP 2012073580 A
- JP 6470455 B
- JP 2021076759 A
- JP 2008544304 A
- JP 2008544317 A
- JP 2002333642 A